# EUROPEAN PATENT APPLICATION

(11) **EP 4 752 939 A1**
(43) Date of publication of application: **03.06.2026**
(21) Application number: 25210612.5
(22) Date of filing: 23.10.2025
(51) Int. Cl.: H01M 4/00, H01M 10/613, H01M 10/653, H01M 50/247, H01M 50/264

(54) **BATTERY PACK**

(30) Priority: 15.11.2024 CN 202411639326; 21.02.2025 CN 202510201154; 13.10.2025 CN 202511457011
(71) Applicant: Nanjing Chervon Industry Co., Ltd., Nanjing, Jiangsu 211106 (CN)
(72) Inventor: YANG, Bin, Nanjing (CN); ZHENG, Hanqing, Nanjing (CN); HAO, Jingdong, Nanjing (CN); LI, Da, Nanjing (CN); HE, Xiaolei, Nanjing (CN)
(74) Representative: Sun, Yiming

(57) **Abstract**

Provided is a battery pack, including: multiple cells; a cell bracket configured to support the multiple cells; and a terminal assembly electrically connected to the multiple cells and configured to be coupled to an interface of a power tool. The cell bracket is at least partially exposed to an external environment, and the thermal conductivity of the cell bracket is higher than or equal to 0.5 W/(m·K). The temperature of the battery pack can be accurately detected, the cycling efficiency of the battery pack is ensured, and the risk of explosion caused by thermal runaway of the battery can be eliminated.

## Description

### TECHNICAL FIELD

The present application relates to a battery system and, in particular, to a battery pack, a charging system, and a charger.

### BACKGROUND

A battery pack, as a mobile power supply, plays a very important role in daily production and life. The battery pack can supply electrical energy to handheld power tools such as a power drill, an impact drill, an impact wrench, an impact screwdriver, and an angle grinder and can also be used on a vehicle.

The battery pack generates heat in a charging or discharging process. If the heat cannot be dissipated in time, the cooling time of the battery is prolonged, resulting in low cycling efficiency of the battery pack and affecting the charging efficiency. If a coolant device is disposed on the battery pack for cooling, the weight and volume of the battery pack are increased, affecting use of a user. In the charging or discharging process of the battery pack, the temperatures of cells in the battery pack need to be detected in real time. In the existing art, a gap exists between a temperature sensing element and the surface of a cell, making it impossible to accurately detect the temperature of the cell.

To protect an end portion of the positive electrode and an end portion of the negative electrode of the battery pack, a protective housing is typically disposed at end portions of the battery pack. However, after the battery pack undergoes thermal runaway, it is difficult to damage the protective housing for pressure relief, so the battery pack has the risk of explosion.

This part provides background information related to the present application, and the background information is not necessarily the existing art.

### SUMMARY

An object of the present application is to solve or at least alleviate part or all of the preceding problems.

To achieve this object, the present invention adopts the technical solutions described below.

A battery pack includes multiple cells, a cell bracket, and a terminal assembly. The cell bracket is configured to support the multiple cells. The terminal assembly is electrically connected to the multiple cells and is configured to be coupled to an interface of a power tool. The cell bracket is at least partially exposed to an external environment, and the thermal conductivity of the cell bracket is higher than or equal to 0.5 W/(m·K).

In some examples, the cell bracket is formed with a retaining portion, and the retaining portion is used for fixing a circuit board.

In some examples, the multiple cells are disposed inside the cell bracket, and the circuit board is disposed outside the cell bracket.

In some examples, the retaining portion is formed with heat dissipation ribs, and the heat dissipation ribs are disposed between the multiple cells and the circuit board.

In some examples, the battery pack further includes a side housing portion, and the side housing portion is substantially perpendicular to the axis of each of the multiple cells and is used for covering electrodes of the multiple cells.

In some examples, the electrodes of the multiple cells are covered with a sealant.

In some examples, the battery pack further includes a fuse, where the cell bracket includes a support rib for supporting the fuse.

In some examples, the battery pack further includes an upper housing portion, where the upper housing portion is disposed between the terminal assembly and the circuit board.

In some examples, a sealing member is disposed between the cell bracket and the upper housing portion or the side housing portion.

In some examples, the battery pack further includes a heat-spreading member that clasps the multiple cells, where the thermal conductivity of the heat-spreading member is higher than the thermal conductivity of the cell bracket, and the cell bracket is in direct contact with the heat-spreading member.

In some examples, the minimum distance between the cells and an exposed surface of the cell bracket is less than or equal to 3 mm.

A battery pack includes multiple cells, a housing assembly, and a terminal assembly. The multiple cells are substantially cylindrical and each include a first end surface and a second end surface. The housing assembly includes at least side housing portions that are substantially parallel to the first end surface and the second end surface. The terminal assembly is electrically connected to the multiple cells and is configured to be coupled to an interface of a power tool. In the axial direction of each of the multiple cells, no air gap exists between the first end surface and one of the side housing portions with the minimum linear distance therefrom, and an air gap exists between the second end surface and one of the side housing portions at the minimum linear distance therefrom.

In some examples, the thermal conductivity of a component between the one of the side housing portions at the minimum linear distance from the first end surface and the first end surface is higher than or equal to 0.3 W/(m·K).

In some examples, a sealant is filled between the one of the side housing portions at the minimum linear distance from the first end surface and the first end surface.

In some examples, in the axial direction of each of the multiple cells, the thickness of a sealant coating on at least part of the second end surface is smaller than the thickness of a sealant coating on the first end surface.

In some examples, multiple air gaps exist between the one of the side housing portions at the minimum linear distance from multiple second end surfaces and the multiple second end surfaces, and the multiple air gaps communicate with each other.

In some examples, each of the side housing portions includes a frame and a cover plate nested within the frame.

In some examples, each of the side housing portions includes a thermally conductive rib.

In some examples, the battery pack further includes a heat-spreading member that clasps the multiple cells, where the thermal conductivity of the heat-spreading member is higher than or equal to 0.5 W/(m·K).

In some examples, in the axial direction of each of the multiple cells, the length of the heat-spreading member is less than or equal to two thirds of the length of each of the multiple cells.

In some examples, the housing assembly is formed with a second air inlet and a second air outlet, and an airflow flows in from the second air inlet, passes through gaps among the multiple cells, and flows out from the second air outlet.

In some examples, each of the multiple cells includes an exhaust device, and the exhaust device is disposed on the second end surface.

In some examples, the negative electrode of each of the multiple cells is disposed on the first end surface, and the positive electrode of each of the multiple cells is disposed on the second end surface.

A battery pack includes multiple cells, a housing assembly, and a terminal assembly. The multiple cells are cylindrical. The housing assembly includes at least a side housing portion substantially parallel to an end surface of each of the multiple cells. The terminal assembly is electrically connected to the multiple cells and is configured to be coupled to an interface of a power tool. The side housing portion includes a frame and at least one cover plate nested within the frame, and when any one of the multiple cells undergoes thermal runaway, the at least one cover plate at least partially detaches from the frame.

In some examples, a force required by the at least one cover plate to detach from inside to outside is smaller than a force required by the at least one cover plate to detach from outside to inside.

In some examples, multiple cover plates are arranged in a honeycomb pattern.

In some examples, when the area of each cover plate is less than or equal to 7 square millimeters, the flame-retardant grade of the cover plate is lower than or equal to HB, and when the area of each cover plate is greater than or equal to 7 square millimeters, the flame-retardant grade of the cover plate is higher than or equal to HB.

In some examples, the elastic modulus of the frame is greater than or equal to 140 MPa.

In some examples, the elastic modulus of the at least one cover plate is less than or equal to 140 MPa.

In some examples, the at least one cover plate is made of plastic, metal, or rubber.

In some examples, the at least one cover plate and the frame are nested and joined through injection molding or assembly.

A battery pack includes multiple cells, a cell bracket, an embracing element, and a temperature sensing element. The multiple cells are substantially cylindrical. The cell bracket is configured to support the multiple cells. The embracing element is independent of the cell bracket and is configured to embrace one cell among the multiple cells. The temperature sensing element includes a wire and a probe, and the probe is disposed between the embracing element and the clamped cell.

In some examples, the cell bracket is formed with a retaining portion, and the retaining portion is used for fixing a circuit board.

In some examples, the multiple cells are disposed inside the cell bracket, and the circuit board is disposed outside the cell bracket.

In some examples, one end of the wire is connected to the probe, and the other end of the wire is electrically connected to the circuit board.

In some examples, the embracing element embraces the middle section of the cell.

In some examples, the embracing element includes an opening.

In some examples, the inner diameter of the embracing element is smaller than the diameter of the cell.

In some examples, the embracing element is made of plastic, and the thickness of the embracing element is less than or equal to 2 mm.

In some examples, at least the probe is covered with a film material.

In some examples, a force applied to the probe by the embracing element is greater than or equal to 0.5 N and less than or equal to 10 N.

In some examples, in the axial direction of each of the multiple cells, the length of the embracing element is greater than or equal to 5 mm and less than or equal to 50 mm.

A battery pack includes a housing assembly, multiple cells, a magnetic element, and a temperature sensing element. The multiple cells are accommodated in the housing assembly and include magnetic housings. The magnetic element is magnetically attached to one cell among the multiple cells. The temperature sensing element includes a wire and a probe, and the temperature sensing element is at least partially clamped between the magnetic element and the cell.

In some examples, the magnetic housings are steel housings.

In some examples, the curvature of part of the magnetic element is similar to the curvature of each of the magnetic housings.

In some examples, the temperature sensing element and the magnetic element are accommodated in a cell bracket.

In some examples, the probe is a thermistor.

In some examples, at least the probe is covered with a film material.

In some examples, the magnetic element is adhered, bound, or stuck to the temperature sensing element.

In some examples, the magnetic element includes a recess for accommodating the probe.

A battery pack includes a housing assembly, multiple cells, and a temperature sensing element. The multiple cells are accommodated in the housing assembly and include magnetic housings. The temperature sensing element includes a wire, a probe, and a magnetic element, and the temperature sensing element is magnetically attached to one cell among the multiple cells.

In some examples, the wire, the probe, and the magnetic element are covered with a film material.

In some examples, the wire and the probe are covered with a film material, the magnetic element is a magnetic coating, and the magnetic coating is coated on a side of the film material facing away from the probe.

In some examples, the probe is a thermistor.

A battery pack includes a housing assembly, multiple cells, and a cell bracket. The multiple cells are accommodated in the housing assembly. The cell bracket is configured to support the multiple cells. The cell bracket is formed with two sets of end air vents and one set of middle air vents, and in a plane parallel to the axis of each of the multiple cells, the set of middle air vents is disposed between the two sets of end air vents.

In some examples, the two sets of end air vents include multiple first air inlets distributed at two ends of the multiple cells.

In some examples, the battery pack further includes an L-shaped partition plate, where the L-shaped partition plate is disposed at one of the multiple first air inlets to guide part of an airflow to cells that do not directly face the multiple first air inlets.

In some examples, the set of middle air vents includes multiple first air outlets distributed near the middle section of the multiple cells.

A battery pack includes a housing assembly, multiple cells, and a cell bracket. The multiple cells are accommodated in the housing assembly. The cell bracket is configured to support the multiple cells. The cell bracket is formed or mounted with at least one air vent, the at least one air vent includes a channel that guides a flow direction of air, the channel includes a first end close to the housing assembly and a second end close to the multiple cells, and in the axial direction of each of the multiple cells, the distance between the second end and the midpoint of the multiple cells is smaller than the distance between the first end and the midpoint of the multiple cells.

In some examples, the cell bracket is formed with a retaining portion, and the retaining portion is used for fixing a circuit board.

In some examples, the multiple cells are disposed inside the cell bracket, and the circuit board is disposed outside the cell bracket.

In some examples, the cell bracket is formed or mounted with at least two first air inlets, and the two first air inlets are provided on two sides of the circuit board.

In some examples, the included angle between the channel and a horizontal plane is greater than or equal to 30 degrees and less than or equal to 80 degrees.

In some examples, the length of the channel is greater than or equal to 3 mm and less than or equal to 25 mm.

In some examples, the air enters the channel from the first end, flows out of the channel from the second end, and flows toward the multiple cells.

In some examples, first air inlets corresponding to different columns of cells have different areas.

A battery pack includes a housing assembly, multiple cells, and a cell bracket. The multiple cells are accommodated in the housing assembly and are arranged in parallel. The cell bracket is configured to support the multiple cells. Multiple first air inlets are provided on the cell bracket in a direction perpendicular to the axis of each of the multiple cells, and multiple second air outlets are provided on the housing assembly in a direction parallel to the axis of each of the multiple cells.

In some examples, multiple second air inlets are provided on the housing assembly in the direction perpendicular to the axis of each of the multiple cells.

In some examples, the multiple first air inlets and the multiple second air inlets are staggered.

In some examples, the multiple first air inlets are located among multiple layers of cells.

In some examples, first air inlets corresponding to different columns of cells have different areas, and/or second air outlets corresponding to different columns of cells have different areas.

A charging system includes a charger and the preceding battery pack, where the charger includes a battery pack interface, and the battery pack interface is coupled to multiple second air inlets and is used for inputting an airflow into the multiple second air inlets.

A charger includes a housing, a battery pack interface, a Peltier element, and a controller. The battery pack interface is disposed on the housing and configured to be electrically connected to a battery pack. The Peltier element is accommodated in the housing, where the Peltier element includes a first operating surface and a second operating surface, where in a first operating mode, the first operating surface absorbs heat and the second operating surface releases heat, and in a second operating mode, the first operating surface releases heat and the second operating surface absorbs heat. The controller is electrically connected to the battery pack interface and the Peltier element, where the controller is configured to acquire a temperature of the battery pack and control, according to the temperature of the battery pack, the Peltier element to enter the first operating mode or the second operating mode.

In some examples, the controller acquires the temperature of the battery pack by communicating with the battery pack.

In some examples, the controller acquires the temperature of the battery pack through a temperature detection member of the charger.

In some examples, the first operating surface is disposed closer to the battery pack interface than the second operating surface.

In some examples, the charger includes a first fan, where in the first operating mode, the first fan dissipates heat of the second operating surface.

In some examples, the charger further includes a control board, where the controller is disposed on the control board.

In some examples, the charger has a charging air outlet, and an airflow is capable of passing through a first fan, flowing across the control board and the second operating surface, and then discharging through the charging air outlet.

In some examples, the charger includes a second fan, where the charger has a charging air inlet, and an airflow is capable of passing through the charging air inlet, flowing across the first operating surface and the second fan, and then entering the battery pack interface.

In some examples, the Peltier element is reversely energized to switch between the first operating mode and the second operating mode.

A charger includes a housing, a battery pack interface, a Peltier element, a first fan, and a second fan. The battery pack interface is disposed on the housing and configured to be electrically connected to a battery pack. The Peltier element is accommodated in the housing, where the Peltier element includes a first operating surface and a second operating surface, and the first operating surface is disposed closer to the battery pack interface than the second operating surface. The first fan is configured to guide an airflow to flow across the second operating surface. The second fan is configured to guide an airflow to flow across the first operating surface to the battery pack interface.

In some examples, the first fan is configured to guide the airflow from the inside of the housing to the outside of the housing, and the second fan is configured to guide the airflow from the outside of the housing to the inside of the housing.

In some examples, the charger further includes a control board, where the first fan is configured to guide the airflow to flow across the control board and the second operating surface.

In some examples, heat sink fins are disposed on the first operating surface and/or the second operating surface.

In some examples, the charger includes a barrier element, where the first operating surface and the second operating surface are located on two sides of the barrier element, respectively.

In some examples, the first fan and the second fan are mounted on two sides of the barrier element, respectively.

In some examples, the Peltier element has a first operating mode and a second operating mode, where in the first operating mode, the first operating surface absorbs heat and the second operating surface releases heat, and in the second operating mode, the first operating surface releases heat and the second operating surface absorbs heat.

In some examples, the Peltier element is reversely energized to switch between the first operating mode and the second operating mode.

A battery pack includes multiple cells, a housing assembly, a cell bracket, and an end cover. Each of the multiple cells has the shape of a cylinder, and each of the multiple cells includes electrodes disposed at two ends of the cylinder. The housing assembly includes at least a side housing portion substantially parallel to multiple electrodes. The cell bracket is accommodated in the housing assembly and supports the multiple cells, where the cell bracket includes an end surface configured to expose the multiple electrodes. The end cover is disposed between the end surface of the cell bracket and the side housing portion, and a sealant is filled between the end surface and the end cover. When the temperature of any one of the multiple cells is greater than or equal to 150°C, the end cover and the housing are each damaged to form openings.

In some examples, when the temperature of an electrode of any one of the multiple cells or the temperature of the end portion of the cell where an electrode of any one of the multiple cells is located is greater than or equal to 150°C, the end cover and the housing are each damaged to form openings.

In some examples, recesses are formed at portions on the end cover that correspond to at least part of the multiple electrodes.

In some examples, the multiple electrodes include first-type electrodes and second-type electrodes, and the depth of each of recesses of the end cover that correspond to the first-type electrodes is greater than the depth of each of recesses of the end cover that correspond to the second-type electrodes.

In some examples, pressure relief valves are correspondingly mounted to the first-type electrodes, and no pressure relief valves are correspondingly mounted to the second-type electrodes.

In some examples, the first-type electrodes are positive electrodes, and the second-type electrodes are negative electrodes.

In some examples, the thickness of the end cover is less than or equal to 1 mm.

In some examples, the end cover is bendable.

In some examples, the side housing portion substantially parallel to the end cover includes a frame and at least one cover plate nested within the frame.

In some examples, a force required by the at least one cover plate to detach from inside to outside is smaller than a force required by the at least one cover plate to detach from outside to inside.

In some examples, when any one of the multiple cells undergoes thermal runaway, the at least one cover plate at least partially detaches from the frame.

A temperature sensor assembly for a battery pack, wherein the battery pack includes: a plurality of battery cells, each of which is generally cylindrical; a cell bracket configured to support the plurality of battery cells; the temperature sensor assembly includes: an embracing element configured to fit over the battery cells; a temperature sensing element configured to sense the temperature of the battery cells; a radially outwardly protruding retainer provided on the outer circumference of the embracing element; the temperature sensing element being mounted on the retainer, the retainer being capable of retaining the temperature sensing element in at least two directions.

In some embodiments, the retainer defines a three-dimensional containment space.

In some embodiments, the temperature sensing element includes a wire and a probe, the probe being configured as a sensor having a three-dimensional structure, with at least the probe being retained and fixed within the three-dimensional containment space.

In some embodiments, the probe has a teardrop-shaped, hemispherical, cubic, or ellipsoidal shape.

In some embodiments, the embracing element is an open or closed ringshaped element.

In some embodiments, the embracing element is integrally formed to form the retainer.

In some embodiments, the retainer comprises at least two raised crossbars spaced axially along the embracing element, with the space between the two raised crossbars forming the three-dimensional containment space.

In some embodiments, the retainer is a probe holder protruding from the outer wall and having a recessed cavity.

In some embodiments, the recessed cavity wall is configured as a non-enclosed cavity wall.

In some embodiments, a wire securing structure is provided on the cell bracket, which is used to guide and secure the wire(s).

A battery pack includes: a plurality of battery cells, each of which is generally cylindrical; a cell bracket configured to support the plurality of battery cells; an embracing element, independent of the cell bracket and configured to embrace one of the plurality of battery cells; and a temperature sensing element, including a wire and a probe, with the probe disposed between the embracing element and the embraced battery cell.

In some embodiments, the cell bracket is formed with a retaining portion for securing the circuit board.

In some embodiments, the plurality of battery cells are disposed within the cell bracket, and the circuit board is disposed outside the cell bracket.

In some embodiments, one end of the wire is connected to the probe, and the other end is electrically connected to the circuit board.

In some embodiments, the embracing element embraces the middle section of the battery cell.

In some embodiments, the inner diameter of the embracing element is smaller than the diameter of the battery cell.

In some embodiments, the embracing element is made of plastic and has a thickness of 2 mm or less.

In some embodiments, at least the probe is covered by a thin film material.

In some embodiments, the force applied by the embracing element to the probe is greater than or equal to 0.5 N and less than or equal to 10 N.

In some embodiments, the length of the embracing element along the axis of the battery cell is greater than or equal to 5 mm and less than or equal to 50 mm.

The present application has the benefits below.

In the battery pack provided in the present application, the cells are mounted in the cell bracket, and the cell bracket supports the cells. The cell bracket is at least partially exposed to an external environment so that the heat generated by the cells in a charging or discharging process can be directly exchanged with the outside through the cell bracket, thereby shortening the cooling time of the cells. The cells may be mounted in the housing assembly, and no air gap exists between the side housing portion of the housing assembly closest to the first end surface of the cells and the first end surface of the cells. Thus, the heat of the cells can be directly dissipated through the side housing portion. An air channel may be provided on the cell bracket supporting the cells. Air enters the cell bracket through the air channel and performs a heat exchange with the cells, which can also ensure that the heat of the cells is rapidly dissipated. In the preceding manners, the cooling time of the cells can be effectively shortened, thereby improving the cycling efficiency of the battery pack. Moreover, the preceding manners do not require a coolant device to cool the battery pack, which can reduce the weight and volume of the battery pack and facilitate use.

During the operation of the battery pack, the temperature sensing element is clamped onto the cell through the embracing element, or the magnetic element is magnetically attached to the cell housing such that the temperature sensing element is stably attached to the cell housing. Thus, the temperature of the cell can be effectively detected, and the accuracy of the obtained temperature is ensured. The temperature sensing assembly for a battery pack provided in this application includes an embracing element sleeved on a cell of the battery pack. A radially outward protruding retainer is disposed on the outer peripheral wall of the embracing element. A temperature sensing element is mounted on the retainer, and the retainer restricts the temperature sensing element in at least two directions. Since the temperature sensing element can detect the temperature of the cell, and under the constraint of the retainer, the temperature sensing element is pressed against the cell and is secured at least in the radial and axial directions of the cell. This ensures that the temperature sensing element can accurately and promptly collect the temperature of the cell. When the cell temperature exceeds a set limit, overtemperature protection can be activated in time, thereby eliminating safety risks.

The cells are mounted in the housing assembly, and the side housing portion of the housing assembly includes the frame and the at least one cover plate nested within the frame. When any one of the multiple cells undergoes the thermal runaway, the at least one cover plate at least partially detaches from the frame. Thus, a pressure relief channel is formed between the cover plate and the frame so that expanding hot gases generated by the thermal runaway of the cells can rapidly discharge for pressure relief, thereby preventing the explosion of the battery pack.

The cell bracket has end surfaces defining the positions of the electrodes at the two ends of each of the cells, and end covers may be added between the side housing portions of the housing assembly and the end surfaces. Sealant is filled between the end covers and the end surfaces of the cell bracket, that is, between the end covers and the electrodes of the cells. Compared with the solution that the sealant is filled between the side housing portions and the end surfaces of the cell bracket, the thickness of the sealant at the electrodes of the cells may be reduced, and some air gaps are reserved between the end covers and the side housing portions, which is conducive to the pressure relief in the housing of the battery pack during the thermal runaway of the cells.

In the charging system provided in the present application, the cell bracket supporting the cells is provided with the multiple first air inlets, and the housing assembly is provided with the second air outlets. Thus, air can enter from the first air inlets along the axial direction of each of the cells, and then the airflow discharges from the second air outlets along the direction perpendicular to the axial direction of each of the cells. The charging system can effectively cool the cells, shorten the cooling time of the cells, and improve the cycling efficiency of the battery pack.

The present application provides a charger. The Peltier element is disposed in the housing of the charger. With the operating principle of the Peltier element, the battery pack can be cooled or heated through the battery pack interface so that the battery pack is at an appropriate charging temperature, thereby ensuring the charging efficiency.

### BRIEF DESCRIPTION OF DRAWINGS

FIG. 1 is an exploded view of a battery pack.
FIG. 2 is a schematic view of a side housing portion.
FIG. 3 is a schematic view of another side housing portion.
FIG. 4 is a schematic view showing cells and a heat-spreading member.
FIG. 5 is a schematic view of a battery pack with a side housing portion removed.
FIG. 6 is another schematic view of a battery pack with a side housing portion removed.
FIG. 7 is a schematic view of a side housing portion.
FIG. 8 is another schematic view of a side housing portion.
FIG. 9 is another schematic view of a side housing portion.
FIG. 10 is another exploded view of a battery pack.
FIG. 11 is a cross-sectional view of the battery pack in FIG. 10.
FIG. 12 is a schematic view of a battery pack.
FIG. 13 is an exploded view of the battery pack in FIG. 12.
FIG. 14 is a cross-sectional view of the battery pack in FIG. 12.
FIG. 15 is another schematic view of a battery pack.
FIG. 16 is a cross-sectional view of the battery pack in FIG. 15.
FIG. 17 is a schematic view of a side housing portion of the battery pack shown in FIG. 15.
FIG. 18 is a schematic view showing mounting of a temperature sensing element.
FIG. 19 is a top view of a battery pack in FIG. 18.
FIG. 20 is a view taken along A-A in FIG. 19.
FIG. 21 is a partial enlarged view of part A in FIG. 20.
FIG. 22 is a schematic view of the battery pack with the housing assembly removed.
FIG. 23 is a schematic view of the embracing element installed on the cell.
FIG. 24 is a schematic view of the embracing element.
FIG. 25 is a schematic view of an alternative embracing element installed on a cell.
FIG. 26 is a schematic view of an elastic arm disposed on the cell bracket.
FIG. 27 is a schematic view of a mounting slot provided on the cell bracket.
FIG. 28 is a schematic view of a fixing assembly disposed on the cell bracket.
FIG. 29 is a schematic view of a clipping crossbar disposed on the cell bracket.
FIG. 30 is a schematic view of one type of mounting hole provided on the cell bracket.
FIG. 31 is a schematic view of another type of mounting hole provided on the cell bracket.
FIG. 32 is a cross-sectional view of the probe mounting area in FIG. 31.
FIG. 33 is a stack view of the first cell type.
FIG. 34 is a top view of FIG. 33.
FIG. 35 is a stack view of the second cell type.
FIG. 36 is a top view of FIG. 35.
FIG. 37 is a stack view of the third cell type.
FIG. 38 is a top view of FIG. 37.
FIG. 39 is a stack view of the fourth cell type.
FIG. 40 is a top view of FIG. 39.
FIG. 41 is a stack view of the fifth cell type.
FIG. 42 is a top view of FIG. 41.
FIG. 43 is a stack view of the sixth cell type.
FIG. 44 is a top view of FIG. 43.
FIG. 45 is a stack view of cells using lithium iron phosphate (LFP).
FIG. 46 is a schematic view showing mounting of a magnetic element and a temperature sensing element.
FIG. 47 is a top view of a battery pack in FIG. 46.
FIG. 48 is a view taken along B-B in FIG. 47.
FIG. 49 is a partial enlarged view of part B in FIG. 48.
FIG. 50 is a schematic view showing mounting of another temperature sensing element.
FIG. 51 is a top view of a battery pack in FIG. 50.
FIG. 52 is a view taken along C-C in FIG. 51.
FIG. 53 is a schematic view of a battery pack provided with a vertical air channel.
FIG. 54 is a top view of the battery pack in FIG. 53.
FIG. 55 is a view taken along D-D in FIG. 54.
FIG. 56 is a view taken along E-E in FIG. 54.
FIG. 57 is a schematic view of FIG. 54 with a housing assembly removed.
FIG. 58 is another schematic view of a battery pack (with a housing assembly removed) provided with a vertical air channel.
FIG. 59 is a top view of the battery pack in FIG. 58.
FIG. 60 is a view taken along F-F in FIG. 59.
FIG. 61 is a top view of a battery pack provided with a vertical air discharging channel.
FIG. 62 is a view taken along G-G in FIG. 61.
FIG. 63 is another top view of a battery pack provided with a vertical air discharging channel.
FIG. 64 is a view taken along H-H in FIG. 63.
FIG. 65 is a view taken along I-I in FIG. 63.
FIG. 66 is another top view of a battery pack provided with a vertical air discharging channel.
FIG. 67 is a view taken along J-J in FIG. 66.
FIG. 68 is a side view of a battery pack provided with a vertical air discharging channel.
FIG. 69 is a view taken along K-K in FIG. 68.
FIG. 70 is another side view of a battery pack provided with a vertical air discharging channel.
FIG. 71 is a view taken along L-L in FIG. 70.
FIG. 72 is a top view of a charger.
FIG. 73 is a view taken along M-M in FIG. 72.
FIG. 74 is a view taken along N-N in FIG. 72.
FIG. 75 is a flowchart showing operation of a charger.

### Reference list

- 1: battery pack
- 10: temperature sensing element
- 101: wire
- 102: probe
- 11: cell
- 111: sealant
- 112: magnetic housing
- 113: first end surface
- 114: second end surface

- 115: electrode
- 115a: first-type electrode
- 115b: second-type electrode
- 116: center plane
- 12: cell bracket
- 121: heat dissipation rib
- 122a: first air inlet
- 122b: first air inlet
- 1221b: channel
- 12211b: first end
- 12212b: second end
- 122c: first air inlet
- 123: retaining portion
- 124a: first air outlet
- 124b: first air outlet
- 124c: first air outlet
- 1251: end surface opening
- 1252: separator
- 126: elastic arm
- 127: wire securing structure
- 128: fixing assembly
- 1281: clipping crossbar
- 129: mounting hole
- 13: terminal assembly
- 14: embracing element

- 141: retainer
- 1411: raised crossbar
- 1412: clamping arm
- 1413: three-dimensional accommodation space
- 1414: recessed cavity
- 15: housing assembly
- 151: side housing portion
- 1511: frame
- 1512: cover plate
- 1513: air gap
- 1513a: pressure relief channel
- 1514: sealing member
- 1515: thin-wall cover
- 1516: pressure relief port
- 152: upper housing portion
- 1521: button
- 1522: upper cover
- 153: second air inlet
- 154: second air outlet
- 155: end cover
- 1551: recess
- 16: heat-spreading member
- 17: magnetic element
- 18: connector
- 19: circuit board

- 2: charger
- 21: housing
- 211: charging air outlet
- 212: charging air inlet
- 22: Peltier element
- 221: first operating surface
- 222: second operating surface
- 223: heat dissipation fin
- 23: barrier element
- 24: battery pack interface
- 25: first fan
- 26: second fan
- 27: controller
- 28: control board

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, Aand/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

In the present application, the term "device", "module", or "unit" is used for implementing a specific function in the form of hardware or software.

A battery pack, as a mobile power supply, plays a very important role in daily production and life. The battery pack can supply electrical energy to handheld power tools such as a power drill, an impact drill, an impact wrench, an impact screwdriver, and an angle grinder. Moreover, after the battery pack is discharged, the battery pack can continue to be recharged and then used.

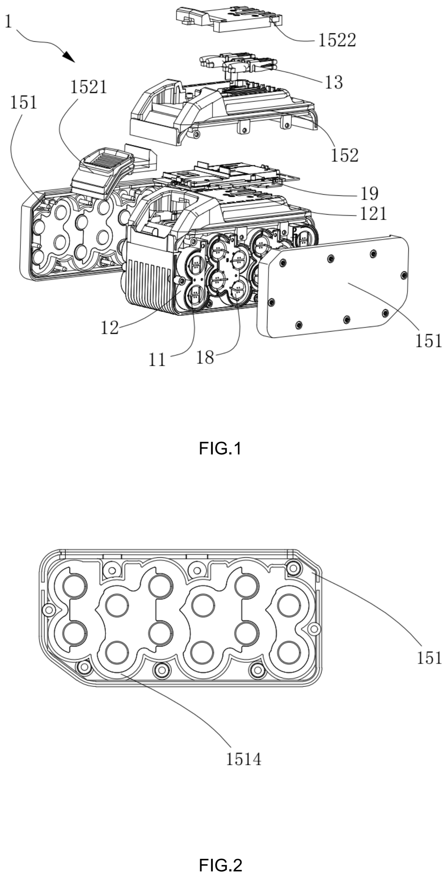

In the process where the battery pack is charged or discharged, to enable cells of the battery pack to be effectively cooled to ensure that the battery pack operates stably, the present application provides a battery pack 1, as shown in FIGS. 1 to 17. The battery pack 1 includes multiple cells 11, a cell bracket 12, and a terminal assembly 13.

The cell bracket 12 is configured to support the multiple cells 11. The terminal assembly 13 is electrically connected to the multiple cells 11 and is configured to be coupled to an interface of a power tool. Thus, electrical energy of the cells 11 is outputted to the power tool through the terminal assembly 13 to drive the power tool to operate. The cell bracket 12 is at least partially exposed to an external environment, and the thermal conductivity of the cell bracket 12 is higher than or equal to 0.5 W/(m·K).

The cell bracket 12 is at least partially exposed to the external environment so that the heat generated by the cells 11 in the charging or discharging process can be directly exchanged with the outside through the cell bracket 12, thereby shortening a heat dissipation path. Moreover, since the cell bracket 12 has the relatively high thermal conductivity, the cell bracket 12 can effectively conduct the heat of the cells 11, thereby shortening the cooling time of the cells and ensuring the heat dissipation capability of the battery pack 1.

In some examples, the cell bracket 12 is formed with a retaining portion 123, and the retaining portion 123 is used for fixing a circuit board 19. The retaining portion 123 is formed on the cell bracket 12 so that it is convenient to position and mount the circuit board 19, and after the circuit board 19 is mounted, it can be ensured that the circuit board 19 is stably disposed on the cell bracket 12.

As shown in FIG. 1, in some examples, the multiple cells 11 are disposed inside the cell bracket 12, and the circuit board 19 is disposed outside the cell bracket 12. The cells 11 are isolated from the circuit board 19 through the cell bracket 12 so that the cells 11 and the circuit board 19 are not located in the same inner space, thereby preventing the heat generated during operation of the cells 11 and the circuit board 19 from accumulating.

As shown in FIG. 1, in some examples, the retaining portion 123 is formed with heat dissipation ribs 121, and the heat dissipation ribs 121 are disposed between the multiple cells 11 and the circuit board 19. The heat dissipation ribs 121 are formed on the retaining portion 123, and the surface areas of the heat dissipation ribs 121 are fully utilized so that a heat dissipation area can be increased. In addition, the heat dissipation ribs 121 are located between the cells 11 and the circuit board 19, thereby helping dissipate the heat generated by the circuit board 19 and the cells 11. Thus, a heat dissipation speed is increased. In some examples, the multiple heat dissipation ribs 121 may be arranged at intervals so that the heat dissipation area can be further increased and heat dissipation efficiency is ensured.

As shown in FIG. 1, in some examples, the battery pack 1 further includes a side housing portion 151, and the side housing portion 151 is substantially perpendicular to the axis of each of the cells 11 and is used for covering electrodes of the multiple cells 11. The side housing portion 151 is disposed so that the electrodes of the cells 11 can be protected from being directly impacted.

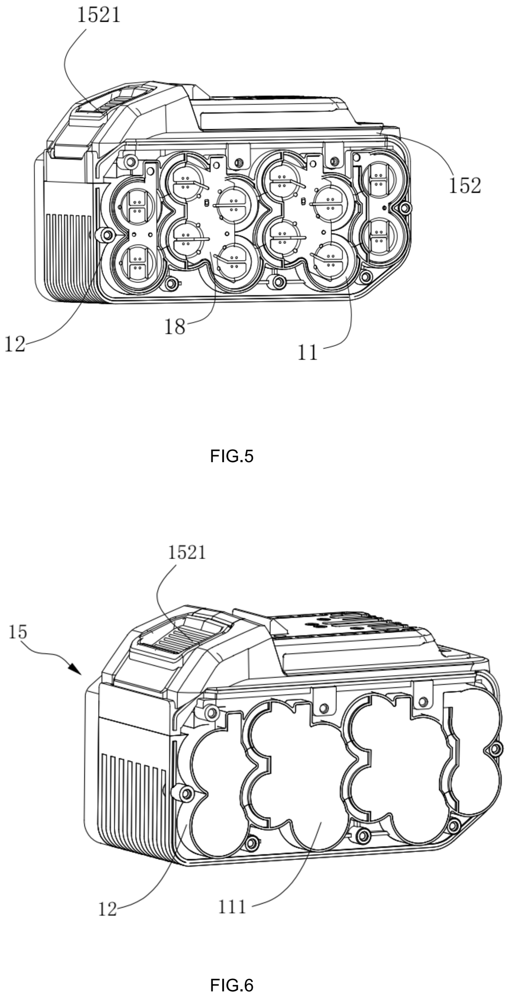

As shown in FIG. 6, in some examples, the electrodes of the cells 11 are covered with a sealant 111. The electrodes of the cells 11 are covered with the sealant 111 so that a waterproof effect can be achieved, thereby preventing water from entering spaces among the cells 11 from the side of the electrodes of the cells 11. Moreover, the fluidity parameter (viscosity) of the sealant 111 is selected so that the sealant 111 can flow through holes of a connector 18 to the back of the connector 18, thereby sealing the entire circumference of the cell 11 and achieving the object of waterproofing the circumference of the cell 11. However, after the electrodes of the cells 11 are covered with the sealant 111, a heat dissipation effect deteriorates. To solve this problem, in an example, the sealant 111 is a thermally conductive sealant 111, and the thermal conductivity of the thermally conductive sealant 111 is higher than or equal to 0.3 W/(m·K). The thermal conductivity of the thermally conductive sealant 111 may be 0.3 W/(m·K), 0.4 W/(m·K), 0.6 W/(m·K), or the like. Since the thermal conductivity of the thermally conductive sealant 111 is higher than that of air, the thermally conductive sealant 111 can better conduct the heat dissipated from the electrodes of the cells 11. Moreover, the thermally conductive sealant 111 can be attached to the side housing portion 151 so that the heat generated by the cells 11 can be conducted through the electrodes and the thermally conductive sealant 111 to the side housing portion 151 and dissipated. In this heat conduction process, air gaps are eliminated, a thermal resistance is reduced, and the heat exchange efficiency between the cells 11 and the external environment is improved.

In some examples, the battery pack 1 further includes a fuse, and the cell bracket 12 includes a support rib for supporting the fuse. The fuse is supported on the support rib of the cell bracket 12 so that the fuse is isolated from the cells 11, thereby avoiding heat accumulation. Moreover, a thermal insulation pad may be disposed between the fuse and the cell bracket 12 to prevent the heat of the fuse from being conducted to the cell bracket 12. In addition, the fuse may be integrated into the transition connector 18 of the battery pack 1 and disposed on the circuit board 19 so that the fuse is isolated from the cells 11 by the upper housing portion 152 (a plastic component) of the battery pack 1, the circuit board 19, air, and the cell bracket 12. Thus, the heat generated by the fuse can be prevented from influencing the cells 11.

As shown in FIG. 1, in some examples, the battery pack 1 further includes the upper housing portion 152, and the upper housing portion 152 is disposed between the terminal assembly 13 and the circuit board 19. The upper housing portion 152 is disposed to be capable of protecting the cells 11 and isolating the terminal assembly 13 from the cells 11, thereby further reducing the influence of the heat of the terminal assembly 13 on the cells 11. An upper cover 1522 is further disposed on the terminal assembly 13 and covers the terminal assembly 13 to protect the terminal assembly 13.

As shown in FIGS. 1 to 3, in some examples, a sealing member 1514 is disposed between the cell bracket 12 and the upper housing portion 152 or the side housing portion 151. The sealing member 1514 is disposed to effectively block the gap between the cell bracket 12 and the upper housing portion 152 or the side housing portion 151, thereby preventing water from entering the cells 11. To further enhance the waterproof effect, a flexible ring or a flexible sleeve may also be attached to an end portion of the cell 11. The flexible ring or the flexible sleeve is clamped between the flanges located between adjacent cells 11 so that the gap between the cell 11 and the cell bracket 12 can be blocked, thereby achieving the waterproof effect. Moreover, the flexible ring or flexible sleeve can also function as a cushion, and when different models of cells 11 share the same cell bracket 12, the flexible ring or flexible sleeve can also provide a compensation for an axial dimension.

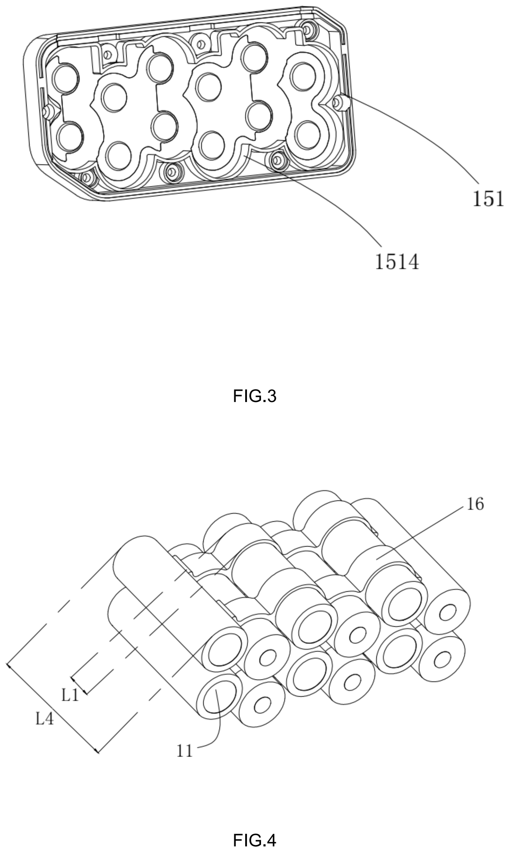

As shown in FIG. 4, in some examples, the battery pack 1 further includes a heat-spreading member 16 that clasps the multiple cells 11. The thermal conductivity of the heat-spreading member 16 is higher than the thermal conductivity of the cell bracket 12, and the cell bracket 12 is in direct contact with the heat-spreading member 16. The heat of two ends of the cell 11 is dissipated through relatively short paths while the heat of the middle portion of the cell 11 is dissipated through a relatively long path. In addition, different cells 11 have various heat generation conditions. Therefore, the heat-spreading member 16 is disposed and can conduct the heat among the cells 11, thereby reducing the temperature differences on the surfaces of the cells 11. The heat of each cell 11 is conducted to the cell bracket 12 through the heat-spreading member 16. Since the thermal conductivity of the heat-spreading member 16 is higher than the thermal conductivity of the cell bracket 12, it can be ensured that the heat of the cells 11 is effectively conducted to the cell bracket 12 and dissipated. The thermal conductivity of the heat-spreading member 16 is higher than or equal to 0.5 W/(m·K) and may be 1 W/(m·K), 1.5 W/(m·K), 2 W/(m·K), or the like. Since the heat-spreading member 16 clasps the cells 11, the heat-spreading effect can be ensured. Furthermore, the heat-spreading member 16 may be disposed at two ends of the cells 11, which is further conducive to the temperature uniformity of the cells 11. It is to be noted that the heat-spreading member 16 does not completely embrace the cells 11. Instead, an annular portion of the heat-spreading member 16 that clasps the cells 11 is provided with an opening. In addition, the diameter of the annular portion of the heat-spreading member 16 is slightly smaller than the diameter of the cell 11. After the annular portion of the heat-spreading member 16 is sleeved onto the cell 11, the annular portion of the heat-spreading member 16 elastically deforms. Under the action of a restoring force of the elastic deformation, the heat-spreading member 16 clasps the cells 11.

In some examples, to further improve the cooling effect on the cells 11, a cooling air channel is formed in the cell bracket 12. The cooling air channel cooperates with a charger 2 during a charging standby period to accelerate heat dissipation. Openings or slots may be formed at portions on the cell bracket 12 that correspond to the cells 11 and the dimensions of the openings or slots are adjusted so that cooling air sub-channels are formed. Thus, the problem is alleviated that cells 11 near an air inlet are cooled fast while cells 11 near an air outlet are cooled slowly. To ensure the cooling effect, the heat-spreading member 16 does not occupy all the space between the cells 11 and the cell bracket 12, reserving the cooling air channel. The heat-spreading member 16 may be disposed at one end of the multiple cells 11, reserving spaces for internal air channels among the cells 11.

In some examples, the minimum distance between the cells 11 and an exposed surface of the cell bracket 12 is less than or equal to 3 mm. The distance between the cells 11 and the exposed surface of the cell bracket 12 mainly includes the thickness of the sealant 111 and the thickness of the exposed surface of the cell bracket 12. The minimum distance between the cells 11 and the exposed surface of the cell bracket 12 may be 3 mm, 2.9 mm, 2.8 mm, 2.7 mm, or the like. The minimum distance between the cells 11 and the exposed surface of the cell bracket 12 is limited so that the length of the heat dissipation path for the end portion of the cell 11 can be limited. Thus, the relatively short heat dissipation path is ensured as far as possible, thereby ensuring the heat dissipation efficiency of the cell 11.

As shown in FIGS. 1 to 10, to shorten the heat dissipation path to ensure the heat dissipation efficiency, the present application further provides the battery pack 1. The battery pack 1 includes the multiple cells 11, a housing assembly 15, and the terminal assembly 13.

Each of the cells 11 is substantially cylindrical and includes a first end surface 113 and a second end surface 114. The housing assembly 15 includes at least side housing portions 151 that are substantially parallel to the first end surface 113 and the second end surface 114. The terminal assembly 13 is electrically connected to the multiple cells 11 and is configured to be coupled to the interface of the power tool. The electrical energy can be outputted through the terminal assembly 13 to drive the power tool to operate. In the axial direction of the cell 11, no air gap exists between one of the side housing portions 151 at the minimum linear distance from the first end surface 113 of the cell 11 and the first end surface 113 of the cell 11, and an air gap 1513 exists between one of the side housing portions 151 at the minimum linear distance from the second end surface 114 of the cell 11 and the second end surface 114 of the cell 11.

Since the thermal conductivity of the air gap 1513 is relatively low, no air gap exists between the side housing portion 151 at the minimum linear distance from the first end surface 113 of the cell 11 and the first end surface 113 of the cell 11, and the air gap 1513 is eliminated from a thermally conductive path for the first end surface 113 of the cell 11. Thus, the thermally conductive path for the cell 11 is shortened, and the heat of the cell 11 is conducted outward through the first end surface 113 and the side housing portion 151, thereby ensuring the heat dissipation efficiency.

As shown in FIG. 6, in some examples, the sealant 111 is filled between the side housing portion 151 at the minimum linear distance from the first end surface 113 and the first end surface 113. The sealant 111 is filled between the first end surface 113 of the cell 11 and the side housing portion 151 for coverage so that the waterproof effect can be achieved, thereby preventing water from entering the spaces among the cells 11. Moreover, the fluidity parameter (viscosity) of the sealant 111 is selected so that the sealant 111 can flow through the holes of the connector 18 to the back of the connector 18, thereby sealing the entire circumference of the cell 11 and achieving the object of waterproofing the circumference of the cell 11. Moreover, the sealant 111 can be attached to the side housing portion 151 and is the thermally conductive sealant 111 so that the heat generated by the cell 11 can be conducted through the first end surface 113 and the thermally conductive sealant 111 to the side housing portion 151 and dissipated. In this heat conduction process, the air gaps are eliminated, the thermal resistance is reduced, and the heat exchange efficiency between the cells 11 and the external environment is improved.

In some examples, the thermal conductivity of each of components between the side housing portion 151 at the minimum linear distance from the first end surface 113 and the first end surface 113 is higher than or equal to 0.3 W/(m·K). The components between the side housing portion 151 at the minimum linear distance from the first end surface 113 and the first end surface 113 are the sealant 111 and connectors 18 configured to electrically connect the multiple cells 11. The thermal conductivity of each of the components may be 0.4 W/(m·K), 0.5 W/(m·K), 0.6 W/(m·K), or the like. Since the thermal conductivity of each of the components between the side housing portion 151 at the minimum linear distance from the first end surface 113 and the first end surface 113 is higher than that of air, the heat dissipated from the first end surface 113 of the cell 11 can be better conducted.

In some examples, in the axial direction of the cell 11, the thickness of a sealant coating on at least part of the second end surface 114 is smaller than the thickness of a sealant coating on the first end surface 113. The air gap 1513 exists between the side housing portion 151 at the minimum linear distance from the second end surface 114 and the second end surface 114. In addition, the thickness of the sealant coating on the second end surface 114 is reduced. The preceding configurations have two objects. One of the two objects is to enable the reduction of the amount of sealant filled at a second end portion to reduce sealant usage. The other object is to enable the formation of a thin-wall space between the second end surface 114 and the side housing portion 151. Thus, when the cell 11 undergoes thermal runaway and pressure relief is performed from the second end surface 114, a pressure relief space can be available for high-temperature and high-pressure gases, which is conducive to the pressure relief.

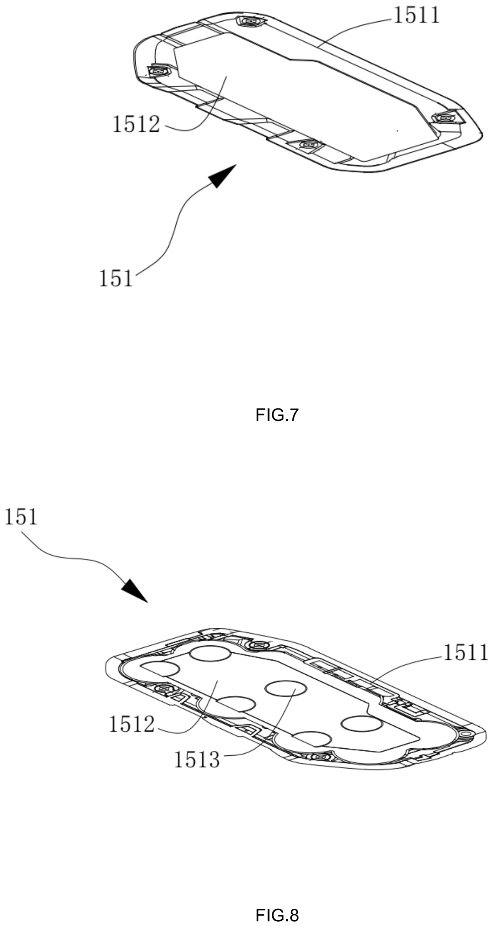

As shown in FIG. 8, in some examples, the air gap 1513 between the side housing portion 151 at the minimum linear distance from the second end surface 114 and the second end surface 114 is located on the side housing portion 151. A sunken slot is provided on a side of the side housing portion 151 facing the second end surface 114, and a space in the sunken slot forms the air gap 1513. In order that it is convenient to subsequently fill the sealant 111 between the second end surface 114 and the side housing portion 151 without influencing the air gap 1513, a thin-wall cover may be mounted at or an insulating paper may be adhered to the sunken slot of the side housing portion 151 to shield the sunken slot, thereby ensuring the formation of the pressure relief space by the air gap 1513.

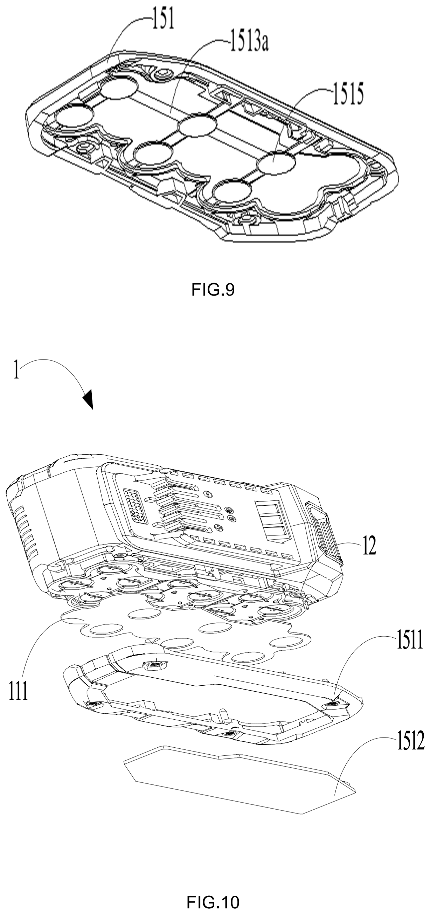

As shown in FIG. 9, in some examples, multiple air gaps 1513 exist between multiple second end surfaces 114 and the side housing portion 151, and the multiple air gaps 1513 communicate with each other. After communicating with each other, the multiple air gaps 1513 form pressure relief channels. Thin-wall covers are mounted at or insulating papers are adhered to the pressure relief channels of the side housing portion 151 to shield the pressure relief channels. When the sealant 111 is filled between the second end surface 114 and the side housing portion 151, the insulating papers or the thin-wall covers isolate the sealant 111 from the pressure relief channels. When the cells 11 undergo the thermal runaway, the high-temperature and high-pressure gases can break through the thin insulating papers or the thin-wall covers, and the pressure relief is performed through the pressure relief channels. The pressure relief channels communicate with a pressure relief port of the battery pack 1. Furthermore, since the pressure relief channels cover a relatively large area, the high-temperature and high-pressure gases can rapidly break through the side housing portion 151 nearby after any one of the cells 11 undergoes the thermal runaway, thereby implementing rapid pressure relief.

As shown in FIGS. 7 to 11, in some examples, the side housing portion 151 includes a frame 1511 and a cover plate 1512 nested within the frame 1511.

The side housing portion 151 is designed in the form of a combination of the frame 1511 and the cover plate 1512. Thus, it is ensured that the first end surface 113 of the cell 11 and the second end surface 114 of the cell 11 are protected, and the relatively thin cover plate 1512 can be designed as needed, thereby facilitating subsequent pressure relief when the cell 11 undergoes the thermal runaway.

In some examples, the side housing portion 151 includes a thermally conductive rib. The thermally conductive rib is formed on the side housing portion 151 so that the heat dissipation area can be increased, thereby improving the heat dissipation efficiency of the first end surface 113 and the second end surface 114 of the cell 11. In some examples, multiple thermally conductive ribs may be arranged at intervals so that the heat dissipation area can be further increased and the heat dissipation efficiency is improved.

As shown in FIG. 4, in some examples, the cells 11 are surrounded by the heat-spreading member 16 that clasps the multiple cells 11. The thermal conductivity of the heat-spreading member 16 is higher than or equal to 0.5 W/(m·K). The heat of two end surfaces of the cell 11 is dissipated through the relatively short paths while the heat of the middle portion of the cell 11 is dissipated through the relatively long path. In addition, the different cells 11 have the various heat generation conditions. Therefore, the heat-spreading member 16 is disposed and can conduct the heat among the cells 11, thereby reducing the temperature differences on the surfaces of the cells 11. The thermal conductivity of the heat-spreading member 16 is 1 W/(m·K), 1.5 W/(m·K), 2 W/(m·K), or the like. Since the heat-spreading member 16 clamps the cells 11, the heat-spreading effect can be ensured. Furthermore, the heat-spreading member 16 may be disposed at the two ends of the cells 11, which is further conducive to the temperature uniformity of the cells 11. It is to be noted that the heat-spreading member 16 does not completely embrace the cells 11. Instead, the annular portion of the heat-spreading member 16 that clasps the cells 11 is provided with the opening. The diameter of the annular portion of the heat-spreading member 16 is slightly smaller than the diameter of the cell 11. After the annular portion of the heat-spreading member 16 is sleeved onto the cell 11, the annular portion is elastically deformed. Under the action of the restoring force of the elastic deformation, the heat-spreading member 16 clasps the cells 11.

As shown in FIG. 4, in some examples, in the axial direction of the cell 11, the length L1 of the heat-spreading member 16 is less than or equal to two thirds of the length L4 of the cell 11. The preceding configuration prevents the heat-spreading member 16 from excessively occupying the space between the cells 11 and the cell bracket 12, reserving the cooling air channel. The heat-spreading member 16 may be disposed at the end of the multiple cells 11, reserving the spaces for the internal air channels among the cells 11.

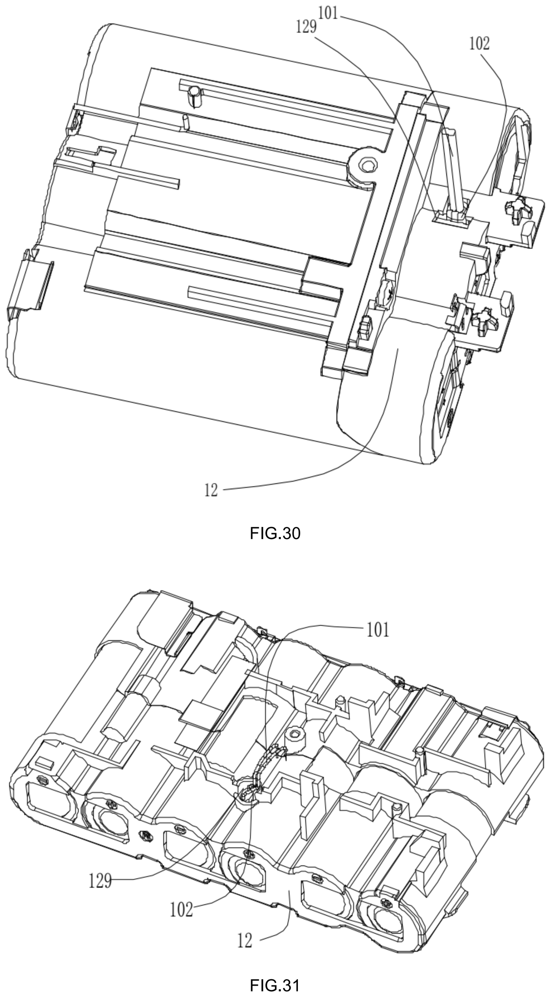

As shown in FIG. 31, in some examples, the housing assembly 15 is formed with a second air inlet 153 and a second air outlet 154, and an airflow flows in from the second air inlet 153, passes through gaps among the multiple cells 11, and flows out from the second air outlet 154. The air inlet and the air outlet are provided on the housing assembly 15 so that the external airflow enters the spaces among the multiple cells 11 through the second air inlet 153 and performs a heat exchange with the cells 11 and the air that completes the heat exchange discharges through the second air outlet 154. In the preceding manner, the cells 11 can be effectively cooled.

In some examples, the cell 11 includes an exhaust device, and the exhaust device is disposed on the second end surface 114. The exhaust device is a safety explosion-proof valve, also referred to as a self-destruction device. The exhaust device serves as the last safeguard for protecting the cell 11. When the cell 11 is subjected to a high temperature, overcurrent, overcharging, or an external short circuit, the internal pressure of the cell 11 rises to a certain value, and the exhaust device is opened by high-pressure gases and detaches from an electrode of the cell 11, and no voltage is outputted outside the cell 11. The exhaust device is disposed so that the cell 11 can be effectively protected.

In some examples, the negative electrode of the cell 11 is disposed at the first end surface 113, and the positive electrode of the cell 11 is disposed at the second end surface 114. With this configuration, the heat dissipation performance of the negative electrode of the cell 11 is ensured, and the thermal runaway protection performance of the cell 11 at the positive electrode is also taken into account.

As shown in FIGS. 7 to 11, during operation of the battery pack 1, there is a risk of thermal runaway because the temperatures of the cells 11 increase. To ensure the safety of the battery pack 1, the present application provides the battery pack 1. The battery pack 1 includes the multiple cells 11, the housing assembly 15, and the terminal assembly 13. The multiple cells 11 are cylindrical. The housing assembly 15 includes at least the side housing portion 151 substantially parallel to the end surface of each of the multiple cells 11. The terminal assembly 13 is electrically connected to the multiple cells 11 and is configured to be coupled to the interface of the power tool. The electrical energy of the cells 11 is outputted to the power tool through the terminal assembly 13 to drive the power tool to operate. The side housing portion 151 includes the frame 1511 and at least one cover plate 1512 nested within the frame 1511, and when any one of the multiple cells 11 undergoes the thermal runaway, the at least one cover plate 1512 at least partially detaches from the frame 1511.

The side housing portion 151 is designed in the form of the combination of the frame 1511 and the cover plate 1512 so that the end surface of the cell 11 can be protected. When any cell 11 undergoes the thermal runaway, the at least one cover plate 1512 at least partially detaches from the frame 1511. Thus, a pressure relief space is formed between the cover plate 1512 and the frame 1511, thereby rapidly discharging the high-temperature and high-pressure gases generated by the thermal runaway of the cell 11.

In some examples, a force required by the at least one cover plate 1512 to detach from inside to outside is smaller than a force required by the at least one cover plate 1512 to detach from outside to inside. When the side housing portion 151 is impacted by an external force, the force is applied to the cover plate 1512 from outside to inside. In this case, the cells can be effectively protected through a relatively bonding force between the cover plate 1512 and the frame 1511. When the cell 11 undergoes the thermal runaway, under the action of high-temperature and high-pressure gases generated by the cell 11 subjected to the thermal runaway, the cover plate 1512 at least partially detaches from the frame 1511 to form the pressure relief space because a force is applied to the cover plate 1512 from inside to outside, thereby rapidly discharging the high-temperature and high-pressure gases generated by the thermal runaway of the cell 11.

In some examples, multiple cover plates 1512 are arranged in a honeycomb pattern. The mesh-like frame 1511 and the multiple small cover plates 1512 nested within the frame 1511 are disposed so that the overall strength of the side housing portion 151 can be increased, and when any cell 11 undergoes the thermal runaway, a nearby cover plate 1512 can be damaged to implement the pressure relief.

In some examples, when the area of each cover plate 1512 is less than or equal to 7 square millimeters, the flame-retardant grade of the cover plate 1512 is lower than or equal to HB, and when the area of each cover plate 1512 is greater than or equal to 7 square millimeters, the flame-retardant grade of the cover plate 1512 is higher than or equal to HB. The area and flame-retardant grade of the cover plate 1512 are limited. Thus, when the area of the cover plate 1512 is relatively small, the force-bearing area of the cell 11 subjected to the runaway is relatively small, and in this case, a material at a relatively low flame-retardant grade is required so that it is easy for the high-temperature and high-pressure gases to quickly melt through the cover plate 1512 to implement the pressure relief; and when the area of the cover plate 1512 is relatively large, the force-bearing area of the cell 11 subjected to the runaway is relatively large, and in this case, a material at a relatively high flame-retardant grade is required so that the high-temperature and high-pressure gases can quickly break through the cover plate 1512 to implement the pressure relief.

In some examples, the elastic modulus of the frame 1511 is greater than or equal to 140 MPa. The elastic modulus of the frame 1511 may be 145 MPa, 150 MPa, 155 MPa, 160 MPa, or the like. During use, it is ensured that the frame 1511 has sufficient impact resistance to avoid damage.

In some examples, the elastic modulus of the cover plate 1512 is less than or equal to 140 MPa. The elastic modulus of the cover plate 1512 may be 140 MPa, 135 MPa, 130 MPa, 123 MPa, 120 MPa, or the like. During use, it is ensured that the cover plate 1512 is easily damaged in the case where the cell 11 undergoes the thermal runaway, thereby implementing the pressure relief.

In some examples, the cover plate 1512 is made of plastic, metal, or rubber. During use, the material of the cover plate 1512 can be selected as needed and is not further limited herein.

As shown in FIGS. 7 to 9 and FIGS. 12 to 14, in some examples, the cover plate 1512 and the frame 1511 are nested and joined through injection molding or assembly. The cover plate 1512 and the frame 1511 are assembled in the preceding manners such that the side housing portion 151 is made into a composite of two materials. Nesting and joining may be performed through insert injection molding, press-fitting, snap-fitting, or the like. The object of the preceding configurations is that when the cell 11 undergoes the thermal runaway, the high-temperature and high-pressure gases can break through the side housing portion 151 and implements the pressure relief.

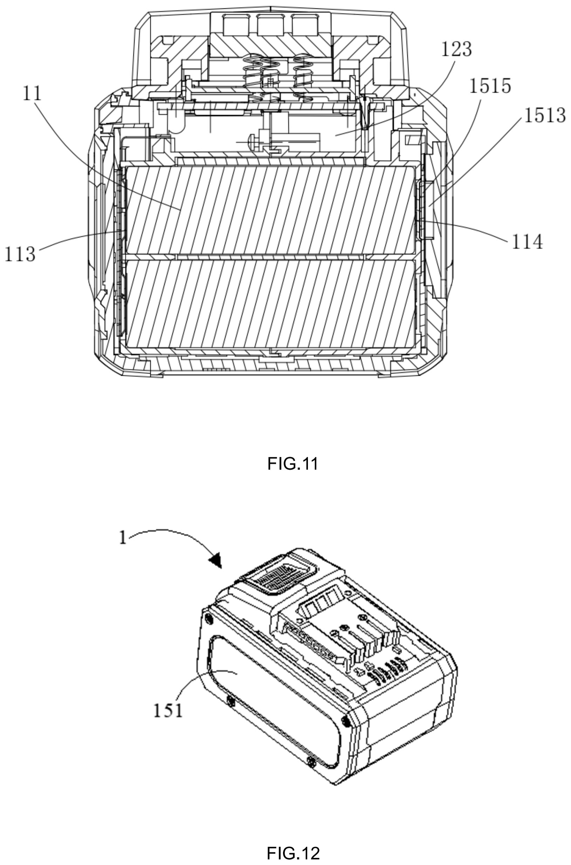

As shown in FIGS. 12 to 17, in some examples, the cell 11 substantially has the shape of a cylinder. The electrodes 115 of the cell 11 are located on the first end surface 113 and the second end surface 114 at the two ends of the cylinder. The cell bracket 12, which supports the multiple cells 11 in the battery pack 1 and is accommodated in the housing assembly 15, has an end surface for defining the positions of electrodes 115 of at least part of the cells 11. This end surface is substantially parallel to the first end surface 113 and the second end surface 114 on which the electrodes 115 of the cell 11 are located. That is, the end surface is substantially perpendicular to the axis of the cell 11 or the plane where the side housing portion 151 is located. Specifically, the end surface of the cell bracket 12 may be provided with at least one opening 1251. The position of the end surface opening(s) 1251 correspond to the positions of the electrodes 115 of the at least part of the cells 11. The end surface openings 1251 and the electrodes 115 of the at least part of the cells 11 may correspond to each other so that the electrodes 115 of the at least part of the cells 11 are exposed relative to the cell bracket 12 and the connectors 18 can electrically connect the exposed electrodes 115 of the cells 11 through the end surface openings 1251. In some examples, the end surface openings 1251 may correspond to the electrodes 115 of the at least part of the cells 11 one to one. In other examples, one end surface opening 1251 may define and correspond to electrodes 115 of multiple cells 11.

In addition, an end cover 155 is further disposed between the end surface of the cell bracket 12 and the preceding side housing portion 151 of the housing assembly 15. Unlike the preceding example, the sealant 111 may be filled between the end surface of the cell bracket 12 and the end cover 155 in this example, rather than between the end surface of the bracket and the side housing portion 151. Specifically, the multiple cells 11 are accommodated and supported within the cell bracket 12. The electrodes 115 of the multiple cells 11 are located on one side of the preceding end surface of the cell bracket 12 and may be relatively exposed through one or more end surface openings 1251. The end cover 155 is mounted on the other side of the end surface, and the plane in which the end cover 155 is located may also be substantially perpendicular to the axis of the cell 11. The sealant 111 is filled between the end surface of the cell bracket 12 and the end cover 155. Like the preceding description, due to the fluidity of the sealant 111, when the end cover 155 is mounted to the end surface of the bracket, the sealant 111 may flow through the holes of the connectors 18 to the backs of the connectors 18 and seal the electrodes 115 of the cells 11 or further seal the circumferences of the cells 11 to waterproof the cells 11. The side housing portion 151 is located outside the end cover 155. The cells 11, the electrodes 115, the cell bracket 12 and the end surface of the cell bracket 12, the sealant 111, the end cover 155, and the side housing portion 151 are sequentially disposed from inside to outside. In some examples, in the axial direction of each of the cells 11, no air gaps exist between the electrodes 115 of the cells 11 relatively exposed through the end surface openings 1251 and the end cover 155 while air gaps 1513 are reserved between the end cover 155 and the side housing portion 151. In some examples, the preceding end cover 155 may be disposed only on the end surface of the bracket on the side where the positive electrode of the cell 11 is located so that the pressure relief space between the end cover and the side housing portion exists outside the positive electrode of the cell. No end cover 155 may be disposed on the end surface of the bracket on the other side where the negative electrode of the cell 11 is located so that the sealant coating between the side housing portion 151 and the end surface of the bracket can be made as thin as possible under the premise of waterproofing. Alternatively, on the side where the negative electrode of the cell 11 is located, the end cover 155 may be clamped between the side housing portion 151 and the end surface of the bracket in a manner that no air gap exists therebetween. In some examples, the end cover 155 may be fixedly mounted to the preceding end surface of the cell bracket 12 through a fastener. For example, a bolt and a nut may be mated with each other such that the end cover 155 is fixedly mounted to the preceding end surface of the cell bracket 12.

Compared with the solution described above that the sealant is directly filled between the end surface of the cell bracket and the side housing portion, this example avoids the case where the space between the electrodes of the cells and the housing inside the bracket is sealed completely by the sealant, and no pressure relief space is reserved, which makes it difficult for airflows and flames to discharge during the thermal runaway and causes the propagation of the thermal runaway. In addition, the waterproof function is retained by the sealant filled between the end cover and the electrodes, and the thickness of the sealant at the electrodes of the cells is reduced, which is more conducive to the pressure relief and flame discharging during the thermal runaway. In addition, the end cover is used for pressing the sealant for assembly so that it is convenient to detach and assemble the battery pack and internal modules thereof, the flow of the sealant can be limited correctly, and the sealant is caused to tightly seal the electrodes of the cell and other components.

To further improve the pressure relief during the thermal runaway, the waterproof function of the sealant 111 is retained, and the sealant coated on the electrodes 115 of the cells 11 should be made as thin as possible. In some examples, portions on the end cover 155 that correspond to electrodes 115 of at least part of the cells 11 may be recessed inward to the electrodes 115 so that the sealant filled between these electrodes 115 and the recesses 1551 of the end cover 155 is thinned, thereby facilitating the pressure relief. In some examples, the end cover 155 may be recessed for all the electrodes 115. In other examples, the end cover 155 may be recessed for only some particular electrodes 115, and for details about a related implementation, reference may be made to the following description.

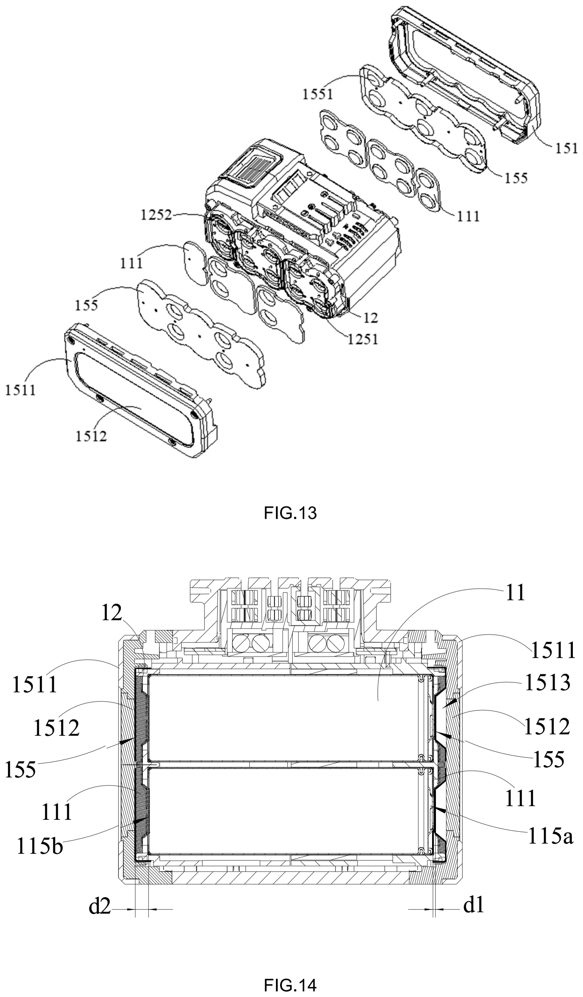

As shown in FIG. 14, in some examples, the electrodes 115 of the multiple cells 11 that are covered by the sealant 111 between the end surface of the cell bracket 12 and the end cover 155 may include first-type electrodes 115a and second-type electrodes 115b. The minimum spacing d1 from the end cover 155 to each of the first-type electrodes 115a is less than the minimum spacing d2 from each of the second-type electrodes 115b to the end cover 155, thereby reducing the thickness of the sealant coated on the electrodes of some cells. Thus, during the thermal runaway, breakthrough points are provided for the airflows and the flames to easily discharge, thereby avoiding a more serious explosion. It is to be understood that the thickness of the sealant coated on the positive electrode of the cell may be naturally different from the thickness of the sealant coated on the negative electrode of the cell due to the differences between the structures and packaging processes of the positive and negative electrodes of the cell. However, in this example, the multiple cells defined and supported by the same end surface of the bracket have the same height in the axial direction. A cylindrical lithium battery is used as an example, where the positive electrode and the negative electrode are located at two axial ends respectively, and the positive electrode protrudes more than the negative electrode. The distance from the highest axial point of the positive electrode of the cell exposed through the opening of the end surface of the bracket to a plane perpendicular to the axis of the cell is the same as the distance from the lowest axial point of the negative electrode of the cell to the plane perpendicular to the axis of the cell. Those skilled in the art should understand that the significance of the preceding solution differs from that of a conventional situation.

In some examples, the preceding first-type electrodes 115a with shorter minimum spacings to the end cover 155 are the electrodes 115 of the cells 11 correspondingly mounted with pressure relief valves while the second-type electrodes 115b with longer minimum spacings to the end cover 155 are the electrodes 115 of the cells 11 not correspondingly mounted with pressure relief valves so that during the thermal runaway, airflows generated at the electrodes with the pressure relief valves more easily discharge to implement the pressure relief. In some examples, the preceding first-type electrodes 115a are the positive electrodes of the cells 11, and the preceding second-type electrodes 115b are the negative electrodes of the cells 11. Since cell modules are formed and connected in different manners, each of multiple electrodes 115 located on the same end surface of the cell bracket 12 may be a positive electrode or a negative electrode, that is, a first-type electrode 115a or a second-type electrode 115b. Alternatively, part of multiple electrodes 115 located on the same end surface of the cell bracket 12 may be positive electrodes, and part of the multiple electrodes 115 are negative electrodes, that is, part of the multiple electrodes 115 are first-type electrodes 115a, and part of the multiple electrodes 115 are second-type electrodes 115b. With reference to the preceding description, in the case where the part of the multiple electrodes 115 defined on the same end surface are the first-type electrodes 115a and the part of the multiple electrodes 115 are the second-type electrodes 115b, different designs may be made to the same end cover 155 for different types of electrodes so as to change the thickness of the sealant near the electrodes. In the case where the multiple electrodes 115 defined on the same end surface are all the first-type electrodes 115a or all the second-type electrodes 115b, the cell bracket 12 may have bracket end surfaces that correspond to the first end surface 113 of the cell 11 and the second end surface 114 of the cell 11, respectively, and two end covers 155 are mounted to the two bracket end surfaces, respectively, where different designs may be made to the two end covers 155 for different types of electrodes. In addition, it is not excluded that the first-type electrodes 115a and the second-type electrodes 115b are distinguished in other manners.

In some examples, the preceding end cover 155 is not in the shape of a flat plate. The minimum spacings between the first-type electrodes 115a and the second-type electrodes 115b and the end cover 155 are changed through a recessed design on the end cover 155. Portions of the end cover 155 that correspond to the positions of electrodes 115 of one or more cells 11 on the other side of the end surface of the cell bracket 12 may be provided with recesses 1551 for these electrodes 115, such as bosses that are recessed inward and may have circular cross sections. Unlike the sunken slot on the side housing portion 151 described above, the end cover 155 is recessed toward the electrodes 115 to change the thickness of the sealant on the electrodes 115, whereas the sunken slot on the inner wall of the side housing portion 151 is formed away from the electrode 115 to avoid the airflows and flames generated by the electrode 115 to form the pressure relief space. With reference to the preceding description, in some examples, the depth of each of recesses at the portions of the end cover 155 that correspond to the positions of the first-type electrodes 115a is greater than the depth of each of recesses at the portions of the end cover 155 that correspond to the positions of the second-type electrodes 115b. Alternatively, no recesses may be designed for the end cover 155 on the side where the second-type electrodes 115b are located, as shown in FIG. 14.

In some examples, in consideration of factors such as the pressure relief and a compact structure, the thickness of the end cover 155 does not exceed 1 mm. Preferably, in some examples, the thickness of the end cover 155 does not exceed 0.7 mm and further does not exceed 0.5 mm. In an example, the thickness of the end cover 155 may be 0.5 mm or 0.3 mm. With reference to the preceding description, in some examples, the thickness of each of the portions on the end cover 155 that correspond to the positions of the first-type electrodes 115a is less than the thickness of each of the portions on the end cover 155 that correspond to the positions of the second-type electrodes 115b. For example, the central local regions of the bosses recessed inward/ the recesses at the portions on the end cover 155 that correspond to the positions of the first-type electrodes 115a may be further provided with a thin-wall feature. In some examples, the end cover 155 is bendable, which does not mean that the end cover 155 is to be bent and broken but means that the end cover 155 is thin and is made of a material with certain flexibility.

As shown in FIG. 13, in some examples, the end cover 155 and/or the end surface of the cell bracket 12 are further formed with separators 1252. The sealant 111 filled between the end cover 155 and the end surface of the cell bracket 12 is divided into several regions by the preceding separators 1252. The separated sealant 111 covers and seals electrodes 115 of one or more cells 11 within each region separately, and sealants 111 in different regions are not in contact with each other, thereby reasonably increasing the creepage distance of the cell and improving the waterproof performance of the cell.

In some examples, the preceding end cover 155 is disposed between the cell bracket 12 and the side housing portion 151 in the battery pack 1, and the sealant 111 is filled between the end cover 155 and the end surface of the cell bracket 12. Moreover, when the temperature of any cell 11 in the battery pack exceeds 150°C, for example, the temperature of an electrode 115 of any cell 11 or the temperature of the cell end portion where the electrode 115 is located exceeds 150°C, both the end cover 155 and the side housing portion 151 are damaged to form openings so that the airflows and flames generated during the thermal runaway can smoothly discharge and implement the pressure relief after breaking through the sealant. The end cover 155 and the side housing portion 151 are damaged and form the openings after the temperature of the cell 11 increases to 150°C, which includes the case where the end cover 155 and/or the side housing portion 151 are burst by internal pressure, the case where the end cover 155 and/or the side housing portion 151 are burned through by the high-temperature airflows or flames, and the case where pop-up or detachment structures of the end cover 155 and/or the side housing portion 151 are triggered due to increasing internal pressure. In some examples, at least part of the end cover 155 and/or at least part of the side housing portion 151 (for example, the portions corresponding to the positions of the electrodes 115 of the cells 11) may be made of a material with low hot hardness. High hot hardness means that a material can maintain relatively high hardness performance at a high temperature, while low hot hardness means that the hardness of a material decreases at a high temperature. This characteristic is conducive to pressure relief in the battery pack during the thermal runaway. In some examples, the thickness of at least part of the end cover 155 and/or at least part of the side housing portion 151 may be reduced for an easier breakthrough. For example, the thicknesses of the portions corresponding to the positions of the electrodes 115 of the cells 11 are reduced.

As shown in FIGS. 13 and 14, with reference to the preceding description, in some examples, one or more side housing portions 151 of the battery pack 1 that are substantially parallel to the electrodes 115 of the cells 11 or are perpendicular to the axis of each of the cells 11 may further adopt composite structures, in addition to providing the end cover 155 with the pressed sealant to reserve the pressure relief space while performing the sealing and waterproofing functions. The side housing portion 151 includes the frame 1511 and the at least one cover plate 1512 nested within the frame 1511. Since the structure of the side housing portion 151 is not integrated, the airflows and flames generated by the thermal runaway at the electrodes 115 of the cells 11 break through the sealant 111 and the end cover 155 and then cause the at least one cover plate 1512 to detach from the frame 1511 when the temperature of any cell 11 in the battery pack exceeds 150°C. The housing assembly 15 is formed with an opening open to an external space, allowing the airflow and flame to discharge and implement the pressure relief. Thus, the safety performance of the battery pack 1 is ensured.

In some examples, a force required by the at least one cover plate 1512 of the side housing portion 151 to detach from the frame 1511 from the inside of the battery pack to the outside of the battery pack is smaller than a force required by the at least one cover plate 1512 of the side housing portion 151 to detach from the frame 1511 from the outside of the battery pack to the inside of the battery pack. Thus, external impact does not cause the cover plate 1512 to detach from the frame 1511, but the cover plate 1512 can automatically detach for the pressure relief during the thermal runaway in the battery pack. In some examples, the side housing portion 151 includes the mesh-like frame 1511 and the multiple small cover plates 1512 arranged in a honeycomb pattern and nested within the mesh. Thus, the structural strength of the side housing portion 151 is enhanced, and during the thermal runaway, the airflows and the flames can break through a nearby small cover plate 1512 to implement the pressure relief. In some examples, the frame 1511 and the cover plates 1512 are nested and joined through injection molding or assembly. The cover plates 1512 and the frame 1511 are assembled in the preceding manners such that the side housing portion 151 is made into the composite of two materials. Nesting and joining may be performed through insert injection molding, press-fitting, snap-fitting, or the like. In some examples, the frame 1511 of the side housing portion 151 and the cover plates 1512 of the side housing portion 151 form a two-color molding structure so that mechanical protection is provided and the pressure relief is facilitated during thermal runaway in a single cell. For the characteristics of the frame 1511 and the cover plates 1512 in the side housing portion 151, reference may be made to the preceding description and the details are not repeated on the premise that the preceding description does not conflict with the solution of this example.

In addition to being damaged for the pressure relief, the side housing portion 151 may be provided with a pressure relief port and/or a pressure relief channel for the pressure relief. As shown in FIGS. 7 to 9 and FIGS. 15 to 17, with reference to the preceding description, in some examples, the side housing portion 151 may be grooved in a direction away from the cells to form pressure relief channels 1513a for the airflows to pass through, where the pressure relief channels 1513a communicate with any one or more air outlets, and/or the side housing portion 151 may be perforated to form pressure relief ports 1516 that communicate with the external space. In addition, the electrodes 115 of the one or more cells 11 may have relative positional relationships with the pressure relief channels 1513a and/or the pressure relief ports 1516 mentioned above so that the airflows generated during the thermal runaway can smoothly enter the pressure relief channels 1513a and/or arrive at the pressure relief ports 1516. In some examples, insulating papers may be adhered to or thin-wall covers 1515 mounted at the pressure relief channels 1513a and/or the pressure relief ports 1516 mentioned above so that air gaps 1513 are reserved as pressure relief spaces between the side housing portion 151 and the insulating papers or the thin-wall covers.

As shown in FIG. 9, in some examples, sunken slots are provided at the portions on the side housing portion 151 that correspond to the positions of the electrodes 115 of the one or more cells 11, where the sunken slots communicate with each other and ultimately lead to the air outlets, that is, the pressure relief channels 1513a are formed. The insulating papers or the thin-wall covers 1515 are disposed at the openings of the sunken slots and the paths for the sunken slots to communicate with each other. The thin-wall covers 1515 may further be recessed inward to the electrodes 115 to enlarge the air gaps 1513. The airflows generated during the thermal runaway start from the electrodes and pass through the sealant, the insulating papers or the thin-wall covers, the pressure relief channels, and the air outlets sequentially. Furthermore, the air outlets that communicate with the pressure relief channels 1513a may be directly provided on the side housing portion 151 so that the pressure relief airflows can discharge over a shorter distance more quickly.

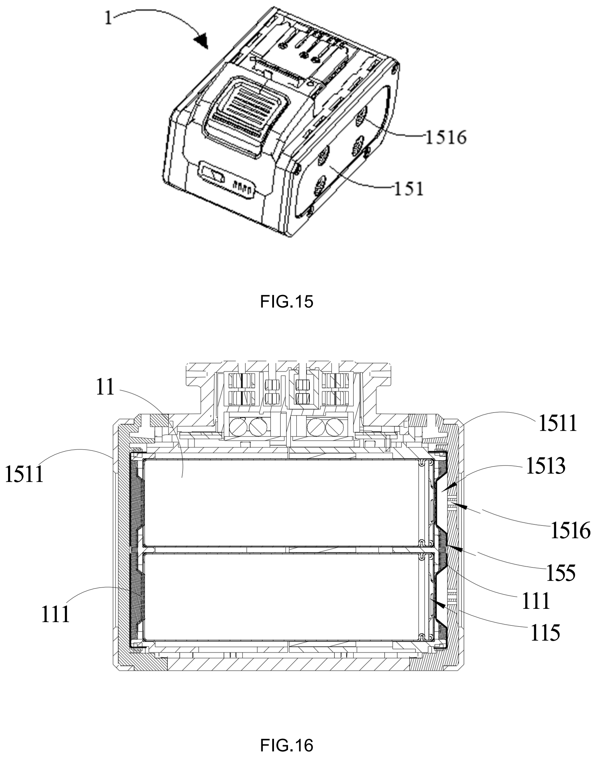

As shown in FIGS. 15 to 17, in other examples, one or more through holes that communicate with the external space are provided at the portions on the side housing portion 151 that correspond to the positions of the electrode 115 of the one or more cells 11, that is, the pressure relief ports 1516 are formed. Specifically, the portions that correspond to the positions of the electrodes 115 may be directly formed with the holes. Alternatively, the corresponding portions may be provided with sunken slots, and the holes are formed at the slot bottoms of the sunken slots. The insulating papers or the thin-wall covers may be adhered at the openings of the sunken slots. Furthermore, the thin-wall covers may further be recessed inward to the electrodes 115 to enlarge the air gaps. The airflows generated during the thermal runaway start from the electrodes and pass through the sealant, the insulating papers or the thin-wall covers, and the pressure relief ports sequentially.

In the preceding example, no end cover 155 may be disposed between the cell bracket 12 and the side housing portion 151. The sealant 111 may be directly filled between the cell bracket 12 and the portions of the side housing portion 151 without the pressure relief channels 1513a or the pressure relief ports 1516 due to no blockage of the insulating papers or the thin-wall covers 1515, and no air gaps are reserved therebetween. Alternatively, the end cover 155 may replace the preceding insulating papers or the thin-wall covers between the cell bracket 12 and the side housing portion 151. The sealant 111 is filled between the end cover 155 and the end surface of the cell bracket 12. The air gaps 1513 are provided at at least the positions of the pressure relief channels 1513a and/or the pressure relief ports 1516 between the end cover 155 and the side housing portion 151. The end cover 155 implements the pressure relief through damage, and the side housing portion 151 implements the pressure relief through the pressure relief channels and/or the pressure relief ports.

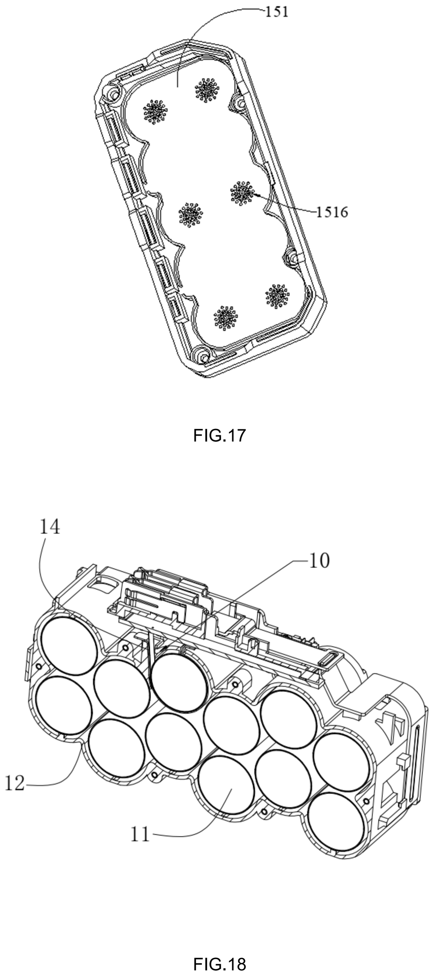

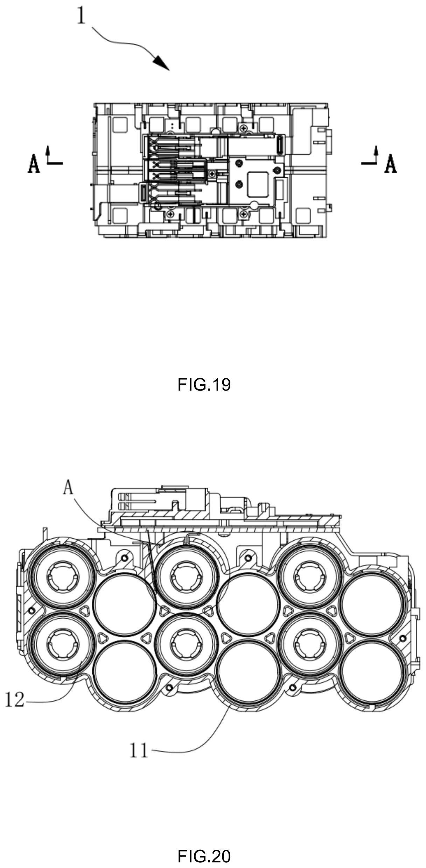

As shown in FIGS. 18 to 21, to facilitate thermal management of the battery pack 1, a temperature sensing element 10 is typically adopted to detect the temperature of the cell 11. To ensure the accuracy of detection data, the present application provides the battery pack 1. The battery pack 1 includes the multiple cells 11, the cell bracket 12, an embracing element 14, and the temperature sensing element 10.

The cells 11 are substantially cylindrical. The cell bracket 12 is configured to support the multiple cells 11. The embracing element 14 is independent of the cell bracket 12 and is configured to embrace one cell 11 among the multiple cells 11. The temperature sensing element 10 includes a wire 101 and a probe 102, and the probe 102 is disposed between the embracing element 14 and the clamped cell 11.

The embracing element 14 clamps the probe 102 of the temperature sensing element 10 to the cell 11 so that the probe 102 of the temperature sensing element 10 can be closely attached to the cell 11. Thus, the temperature of the cell 11 can be effectively collected, and the accuracy of the obtained temperature of the cell 11 is ensured.

In some examples, the cell bracket 12 is formed with the retaining portion 123, and the retaining portion 123 is used for fixing the circuit board 19. The retaining portion 123 is formed on the cell bracket 12 so that it is convenient to position and mount the circuit board 19, and after the circuit board 19 is mounted, it can be ensured that the circuit board 19 is stably disposed on the cell bracket 12.

As shown in FIG. 1, in some examples, the multiple cells 11 are disposed inside the cell bracket 12, and the circuit board 19 is disposed outside the cell bracket 12. The cells 11 are separated from the circuit board 19 through the cell bracket 12 so that the cell bracket 12 and the circuit board 19 are not located in the same inner space, thereby preventing the heat generated during the operation of the cells 11 and the circuit board 19 from accumulating.

In some examples, one end of the wire 101 is connected to the probe 102, and the other end of the wire 101 is electrically connected to the circuit board 19. A temperature signal collected by the probe 102 can be transmitted, through the wire 101, to the circuit board 19 for processing. The wire 101 may be soldered to the circuit board 19. Alternatively, the wire 101 may be connected to the circuit board 19 in a manner other than soldering: the end of the wire 101 is provided with a plug terminal for mating with a corresponding plug terminal on the circuit board 19.

As shown in FIG. 18, in some examples, the embracing element 14 embraces the middle section of the cell 11. Since the paths through which the heat of the two ends of the cell 11 is dissipated are shorter than the path through which the heat of the middle section of the cell 11 is dissipated, the temperatures of the two ends of the cell 11 are lower than the temperature of the middle section of the cell 11. The embracing element 14 is disposed at the middle section of the cell 11 so that it can be ensured that the probe 102 acquires the temperature value of the position with the highest temperature of the cell 11, thereby facilitating subsequent thermal management.

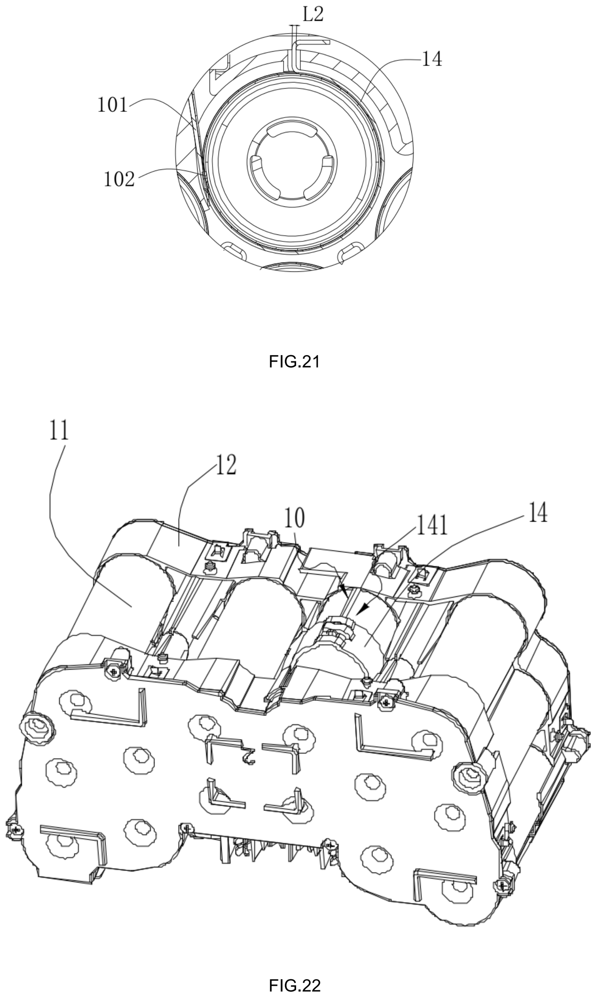

As shown in FIG. 21, in some examples, the embracing element 14 includes an opening. The opening is provided so that the embracing element 14 can elastically deform when embracing the cell 11, thereby enabling the probe 102 clamped between the embracing element 14 and the cell 11 to be stably attached to the cell 11.

In some examples, the inner diameter of the embracing element 14 is smaller than the diameter of the cell 11. After the embracing element 14 is sleeved onto the cell 11, the embracing element 14 elastically deforms, applying a slight clamping force on the cell 11. The temperature sensing element 10 is guided and inserted downward into the wedge angle formed by the embracing element 14 and the cell 11. The slight clamping force of the embracing element 14 presses the probe 102 against the surface of the cell 11 so that the probe 102 between the embracing element 14 and the cell 11 is stably attached to the cell 11.

As shown in FIG. 21, in some examples, the embracing element 14 is made of plastic, and the thickness L2 of the embracing element 14 is less than or equal to 2 mm. The thickness L2 of the embracing element 14 may be 1.8 mm, 1.6 mm, 1.4 mm, or the like. The embracing element 14 is made of plastic so that the elasticity of plastic can be utilized. The thickness L2 of the embracing element 14 is limited, thereby preventing the embracing element 14 from occupying a relatively large space.

In some examples, at least the probe 102 is covered with a film material. The thin-film temperature sensing element 10 is adopted, passing through the cell bracket 12 and disposed on the outer surface of the cell 11. The head of the thin-film temperature sensing element is smaller than the head of a bead-type temperature sensing element, so the thin-film temperature sensing element can be more effectively attached to the surface of the cell 11 to more accurately detect the temperature of the cell 11. In a common thin-film temperature sensing element 10, the film covers the wire 101 and the probe 102. Therefore, the position where the common thin-film temperature sensing element 10 is connected on the circuit board 19 must be near the final temperature detection point of the common thin-film temperature sensing element 10, and the film portion is bent and then is connected to the circuit board 19, which is prone to damage in a mounting process. In an example, a novel thin-film temperature sensing element 10 is adopted. Compared with the common thin-film temperature sensing element 10, the novel thin-film temperature sensing element 10 has an additional wire portion. The wire is located outside the film, and only the probe is covered by the film. The wire portion is provided so that the position of the thin-film temperature sensing element on the circuit board 19 and subsequent mounting are more flexible. In addition, the film portion allows the probe 102 to be more easily attached to the cell. The mounting process is further simplified, where the thin-film temperature sensing element 10 can undergo wave soldering together with other components (the pins of the thin-film temperature sensing element 10 are on the same side as those of the other components) and then is mounted at the final temperature detection point.

In some examples, a force applied to the probe 102 by the embracing element 14 is greater than or equal to 0.5 N and less than or equal to 10 N. The force applied to the probe 102 by the embracing element 14 may be 1N, 2N, 3N, 4N, or the like. Since the probe 102 of the thin-film temperature sensing element 10 cannot bear too much pressure, the force applied to the probe 102 by the embracing element 14 is limited so that it can be ensured that the probe 102 and the cell 11 are stably attached and damage to the probe 102 is avoided.

In some examples, in the axial direction of each of the multiple cells 11, the length of the embracing element 14 is greater than or equal to 5 mm and less than or equal to 50 mm. The length of the embracing element 14 may be 6 mm, 8 mm, 10 mm, 12 mm, or the like. The length of the embracing element 14 is limited so that it can be ensured that the probe 102 of the temperature sensing element 10 is effectively fixed. Moreover, when the airflow passes the cell 11 to cool the cell 11, the embracing member 14 can serve as a wind-blocking member to prevent the temperature at the detection portion of the probe 102 from dropping too quickly, thereby enabling accurate acquisition of the maximum temperature value of the cell 11. In other examples, a wind-blocking structure may be disposed on the surface of the portion of the cell bracket 12 where the probe 102 is correspondingly disposed, so as to prevent flowing air from directly cooling the cell 11 and to ensure that the temperature result detected by the temperature sensing element 10 is more accurate.

As shown in FIGS. 22-25, during the process of using the temperature sensing element 10 to sense the temperature of the cell 11, to ensure that the temperature sensing element 10 is in close contact with the surface of the cell 11 and thus accurately measure the temperature of the cell 11, the present application also provides a temperature sensor assembly for a battery pack. The temperature sensor assembly includes an embracing element 14 and a temperature sensing element 10. The temperature sensing element 10 is configured to sense the temperature of the cell 11. The embracing element 14 is mounted on the cell 11 and has a radially outwardly protruding retainer 141 on its outer peripheral wall. The temperature sensing element 10 is mounted on a retainer 141, which can position the temperature sensing element 10 in at least two directions. For example, the retainer 141 limits the position of the cell 11 in at least the radial and axial directions, ensuring that the temperature sensing element 10 is in close contact with the cell 11. This allows the temperature sensing element 10 to accurately and promptly acquire the temperature of the cell 11. If the temperature of the cell 11 exceeds a set limit, over-temperature protection can be promptly activated, eliminating safety risks.

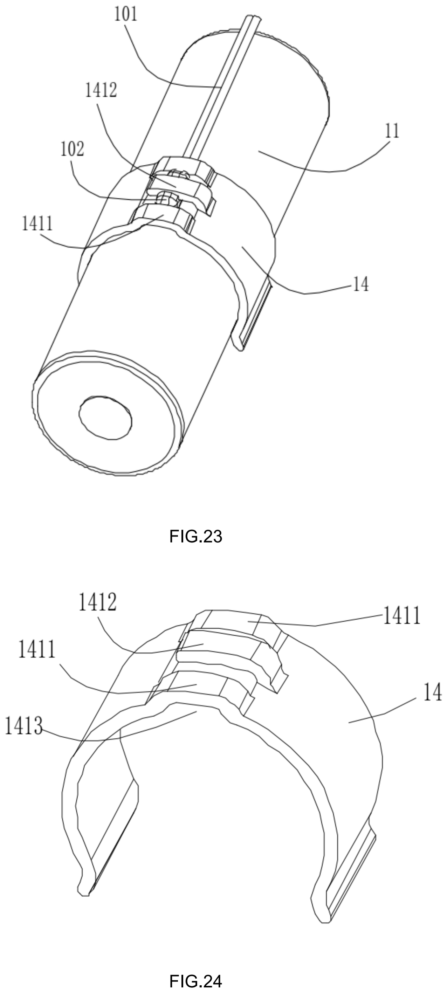

As shown in FIGS. 23 and 24, in some embodiments, the retainer 141 defines a three-dimensional accommodation space 1413. After the embracing element 14 is mounted on the cell 11, a three-dimensional accommodation space 1413 is formed between the retainer 141 and the surface of the cell 11. The temperature sensing element 10 is positioned within the three-dimensional accommodation space 1413, ensuring close contact with the surface of the cell 11. The retainer 141 also limits the position of the temperature sensing element 10, ensuring that the temperature sensing element 10 accurately acquires the temperature of the cell 11 at the set position. The shape of the three-dimensional accommodation space 1413 can be a teardrop, hemispherical, ellipsoidal, cubic, or conical, without further limitation.

As shown in FIGS. 22 and 23, in some embodiments, the temperature sensing element 10 includes a wire 101 and a probe 102. The probe 102 is configured as a sensor with a three-dimensional structure, with at least the probe 102 being restrained and fixed within the three-dimensional accommodation space 1413. Because the probe 102 conforms to the surface of the cell 11, it can accurately measure the temperature of the cell 11. The collected temperature signal is then transmitted to the circuit board via the wire 101. By designing the probe 102 as a three-dimensional structure, once installed in the three-dimensional accommodation space 1413, the probe 102 is secured by the restraining structure 141, limiting radial and axial movement relative to the cell 11 and effectively securing the probe 102 at a predetermined position on the cell 11.

In some embodiments, the probe 102 has a teardrop, hemispherical, cubic, or ellipsoidal shape. The shape of the probe 102 is compatible with the shape of the three-dimensional accommodation space 1413. When the probe 102 is installed in the three-dimensional accommodation space 1413, there is no gap between the probe 102 and the three-dimensional accommodation space 1413, thereby ensuring a stable fit between the probe 102 and the cell 11.

In some embodiments, the embracing element 14 is an open ring or a closed ring. When the embracing element 14 is an open ring, the opening allows the embracing element 14 to elastically deform when embracing the cell 11. The restoring force of the elastic deformation allows the embracing element 14 to clamp onto the cell 11, facilitating installation and ensuring that the relative position of the embracing element 14 relative to the cell 11 remains unchanged. When the embracing element is a closed ring, the probe 102 can be directly placed on the cell 11 after being placed in the three-dimensional accommodation space 1413.

As shown in FIGS. 22-23, in some embodiments, the embracing element 14 is integrally formed to form a retainer 141. The above arrangement facilitates the manufacture of the embracing element 14 and ensures a stable connection between the retainer 141 and the embracing element 14.

As shown in FIGS. 23-24, in some embodiments, the retainer 141 includes at least two raised crossbars 1411 spaced axially along the embracing element 14. The space between the two raised crossbars 1411 forms a three-dimensional accommodation space 1413. When the probe 102 is installed, it is clamped between the two raised crossbars 1411, which retain the probe 102 in both radial and lateral directions. The use of this retainer 141 offers a simple structure, saves material, and effectively positions the probe 102.

As shown in FIGS. 23-24, in some embodiments, a clamping arm 1412 is disposed between the two raised crossbars 1411, one end of which is connected to the embracing element 14. After the probe 102 is clamped between the two raised crossbars 1411, the clamping arm 1412 is lifted and elastically deformed. The elastic restoring force of the clamping arm 1412 ensures a tight fit between the probe 102 and the cell 11, thereby ensuring accurate temperature measurement. To further secure the probe 102, the side of the probe 102 facing the clamping arm 1412 has an abutment groove. The clamping arm 1412 is positioned within the abutment groove and abuts against the bottom of the groove.

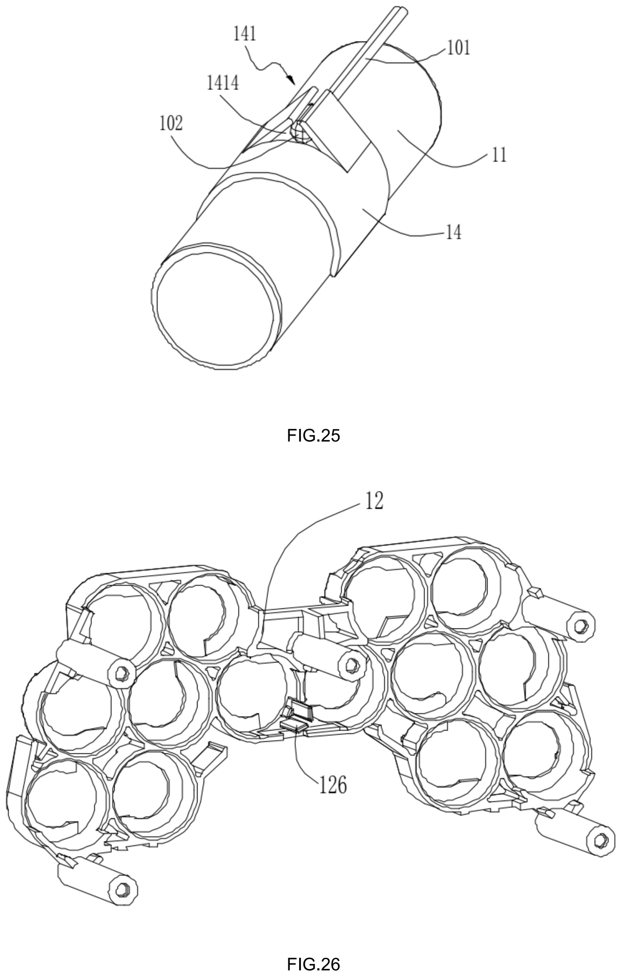

As shown in FIG. 25, in some embodiments, the retainer 141 is a probe holder protruding from the outer wall and having a recessed cavity 1414. After the embracing element 14 is placed over the cell 11, the probe 102 is positioned within the recessed cavity 1414.

As shown in FIG. 25, in some embodiments, the recessed cavity 1414 has a non-enclosed cavity wall. When the probe 102 is installed in the recessed cavity 1414, the non-enclosed cavity wall causes the probe holder to elastically deform. Under the action of the elastic restoring force, the probe holder presses the probe 102 against the surface of the cell 11, ensuring close contact between the probe 102 and the cell 11.

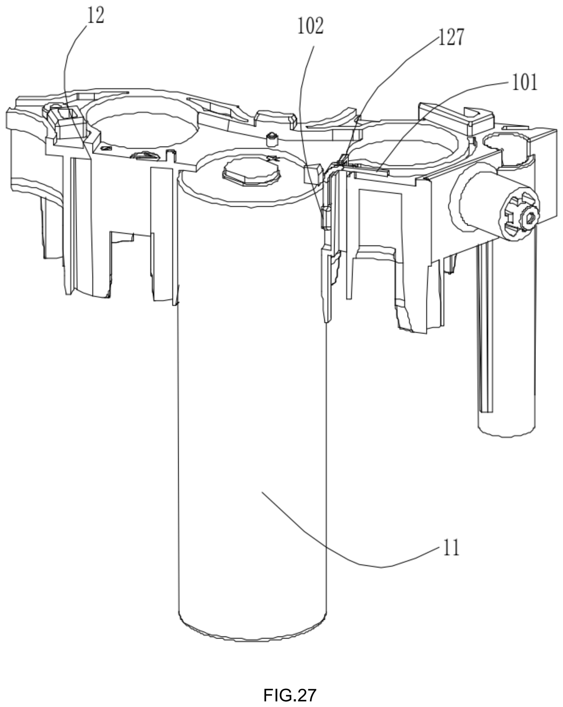

As shown in FIG. 27, in some embodiments, the cell bracket 12 is provided with a wire securing structure 127, which guides and secures the wire 101. This structure allows the wire 101 to be routed along a predetermined routing path. The structure 127 is L-shaped and perpendicular to the radial direction of the cell 11. A wire retaining groove is formed between the structure 127 and the cell bracket 12, through which the wire 101 of the temperature sensing element 10 are routed.

To simplify the temperature sensor assembly, the temperature sensing element 10 can still be installed without the embracing element 14. As shown in FIG. 26, in some embodiments, two elastic arms 126 are spaced apart on the cell bracket 12. These elastic arms 126 are parallel to the axis of the cell 11 and located at the ends of the cell 11. The probe 102 is mounted between the two elastic arms 126. After the probe 102 is mounted, the two elastic arms 126 elastically deform. Under their own elastic restoring force, the elastic arms 126 press the probe 102 against the surface of the cell 11, ensuring close contact between the probe 102 and the cell 11.

As shown in FIG. 25, in some embodiments, a mounting slot can be provided on the cell bracket 12. The mounting slot extends along the axis of the cell 11, with a portion of the mounting slot forming an opening between the mounting slot and the cell 11. The probe 102 is positioned within the opening of the mounting slot, in close contact with the surface of the cell 11, with a portion of the wire 101 extending through the mounting slot. By directly providing the mounting slot on the cell bracket 12, the structure of the cell bracket 12 can be further simplified and the installation of the temperature sensing element 10 can be facilitated.

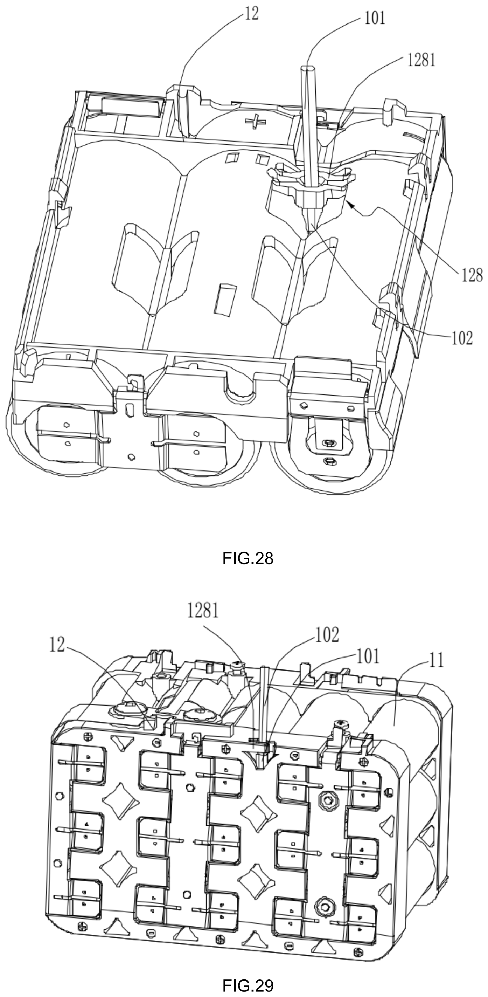

As shown in FIG. 28, in some embodiments, a fixing assembly 128 for fixing the probe 102 is integrally formed on the battery holder 12. The fixing assembly 128 includes two spaced-apart clipping crossbars 1281, which are perpendicular to the axial direction of the cell 11. A clamping space for accommodating the probe 102 is formed between the two clipping crossbars 1281. During installation, the probe 102 is inserted into the clamping space, and the probe 102 fits tightly against the cell 11. When the probe 102 is installed in place, the clipping crossbars 1281 undergo elastic deformation, and under the action of the elastic restoring force, the two clipping crossbars 1281 tightly clamp the probe 102. The fixing assembly 128 can be arranged near the middle of the cell 11 corresponding to the cell bracket 12, so that the temperature of the middle of the cell 11 can be detected by the probe 102. As shown in FIG. 29, a clipping crossbar 1281 can also be arranged in the cell bracket 12 near the end of the cell 11, creating a clamping space between the clipping crossbar 1281 and the cell 11. When the probe 102 is installed in the clamping space, the elastic restoring force of the clipping crossbar 1281 allows the probe 102 to adhere tightly to the surface of the cell 11.

As shown in FIGS. 30-32, in some embodiments, a mounting hole 129 can be directly formed in the cell bracket 12. The probe 102 is inserted into the mounting hole 129, ensuring close contact with the surface of the cell 11. The mounting hole 129 can be located in places of the cell bracket 12 corresponding to the end of the cell 11, or the center of the cell 11. The specific place depends on the material and heat generation characteristics of the cell 11. The mounting hole 129 can be designed in a triangular, circular, quadrilateral, or T-shaped shape, without further limitation.

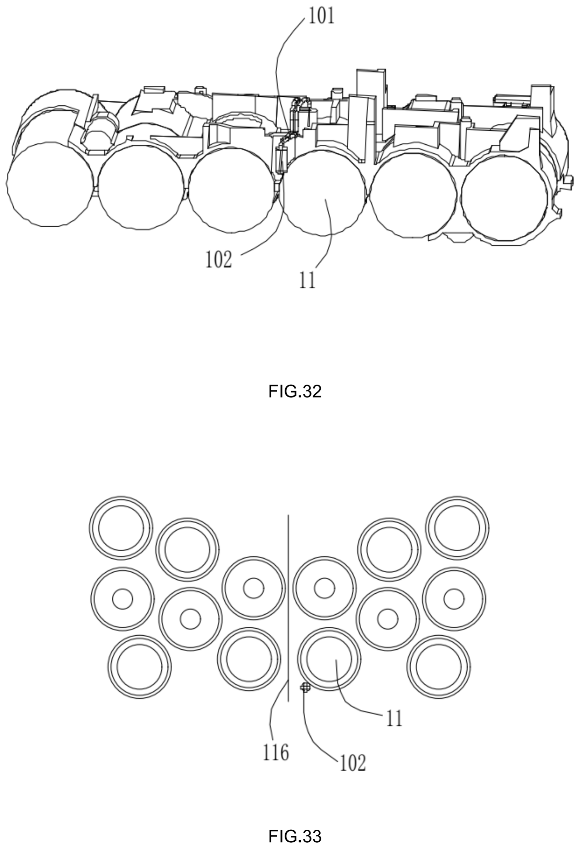

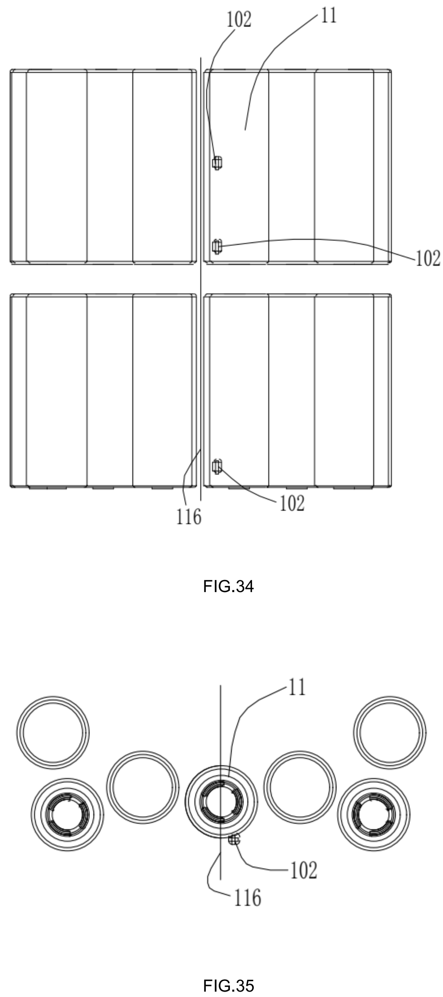

As shown in FIGS. 33-34, within a battery pack 1, the cells 11 located near or at the center plane 116 of the battery pack 1 typically have higher temperatures and require specific monitoring. Furthermore, the primary heat generation locations for full-tab and non-full-tab cells 11 differ. For full-tab cells 11, the primary heat generation location is near the polarity end (positive or negative) of the cell 11, while for non-full-tab cells 11, the primary heat generation location is in the middle section of the cell 11. Therefore, positioning temperature sensing elements 10 according to the type and heat generation characteristics of the cell 11 allows for more accurate measurement of the cell 11 temperature.

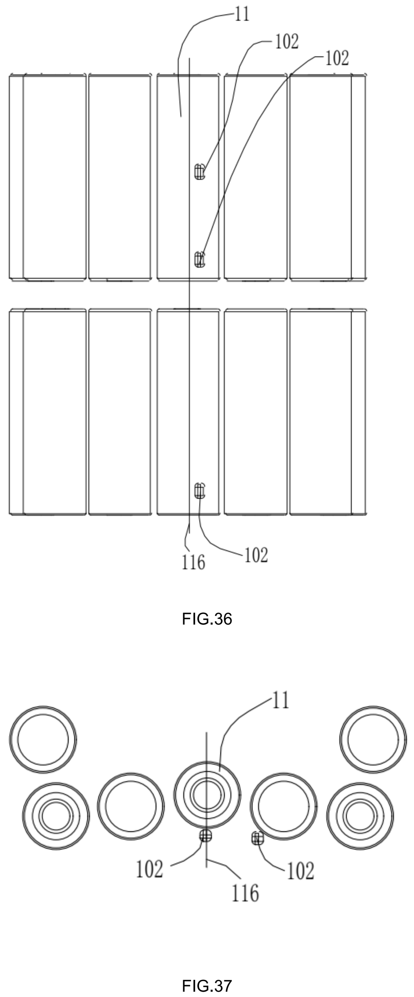

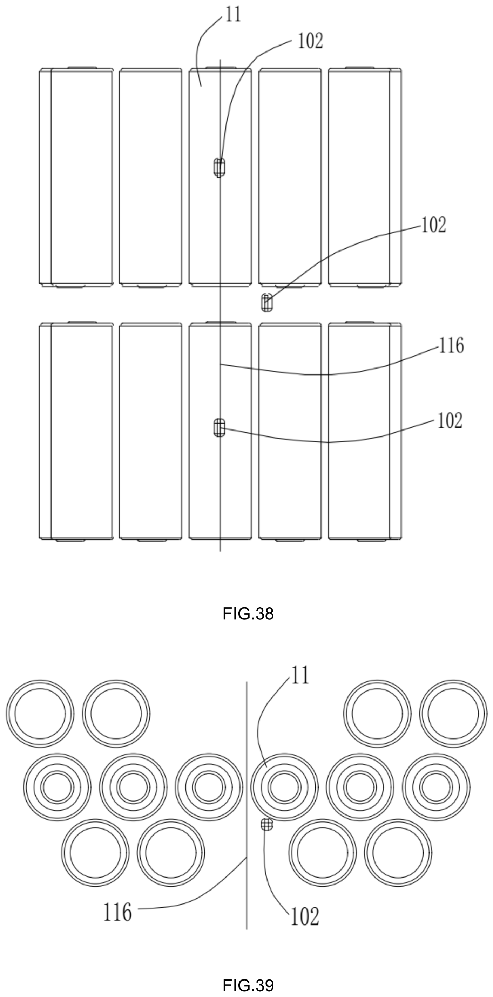

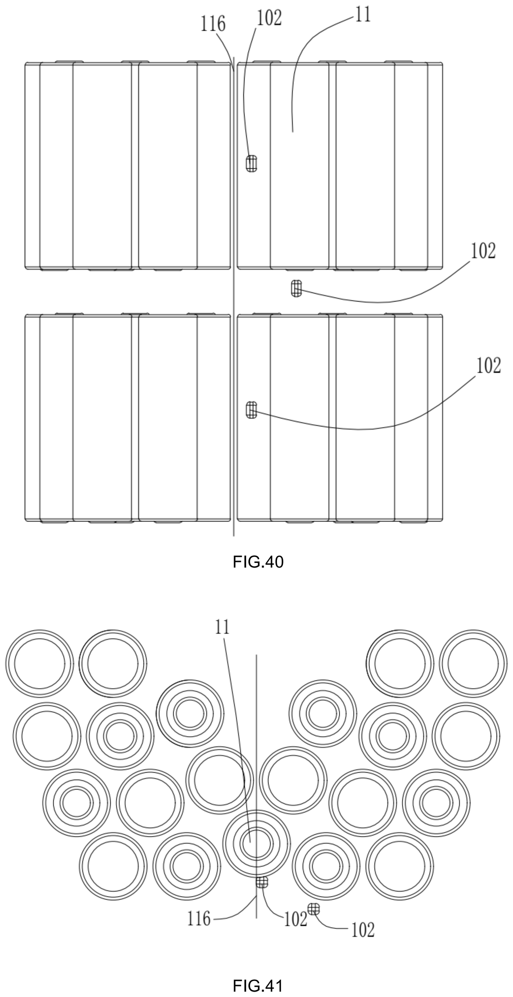

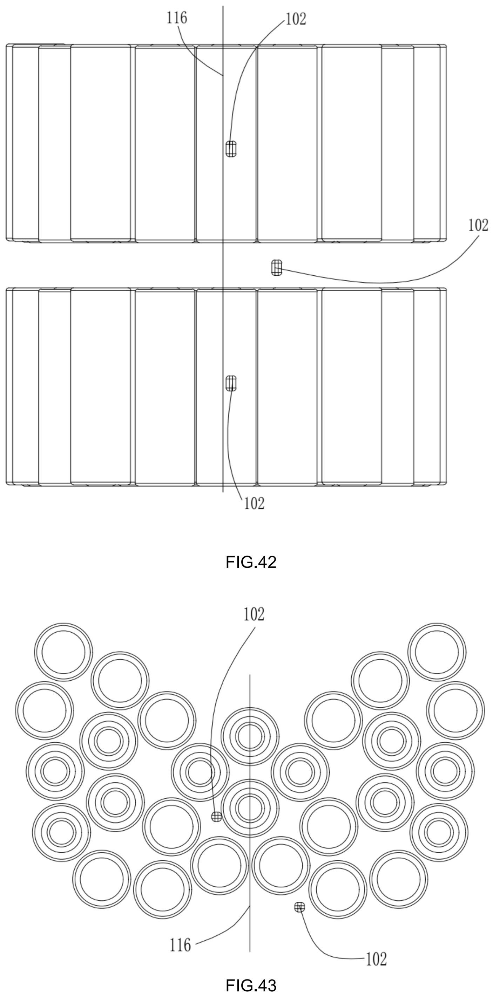

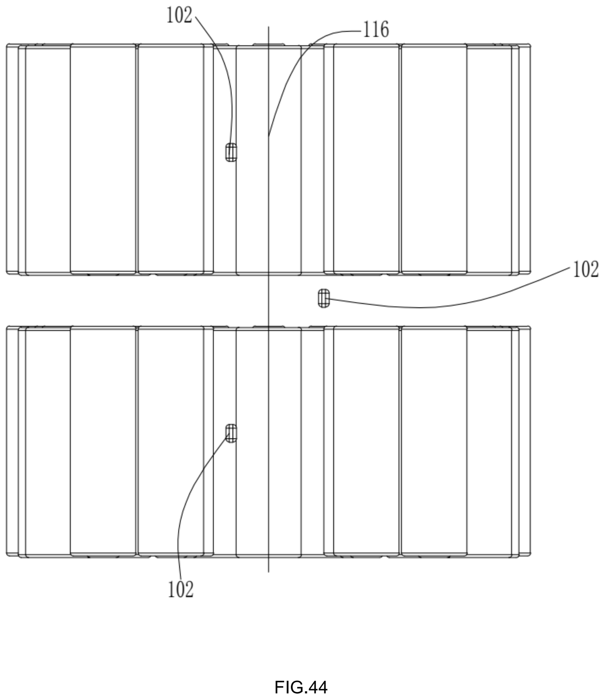

As shown in FIGS. 33-44, to more accurately measure the heat generation characteristics of the cells 11 within the battery pack 1, two or more temperature sensing elements 10 are typically deployed within the battery pack 1. In some embodiments, three temperature sensing elements 10 are arranged. For example, the temperature sensing elements are located on two cells 11 near or located on the center plane 116 of the battery pack 1, wherein two temperature sensing elements 10 are located in the middle section and around the positive or negative end of one cell 11, respectively; and another temperature sensing element 10 is located around the positive or negative end of another cell 11. Since the temperature feedback provided by the temperature sensing elements 10 has a certain hysteresis, the arrangement of three temperature sensing elements 10 can improve the accuracy of temperature estimation. In some embodiments, a temperature sensing element 10 can be disposed on the same or different ends of two cells 11 near or on the center plane 116 of the battery pack 1. A third temperature sensing element 10, which is not in direct contact with any cell 11 , is used to detect the ambient temperature. This arrangement facilitates the acquisition of the heating status of the cells 11 in the ambient temperature.

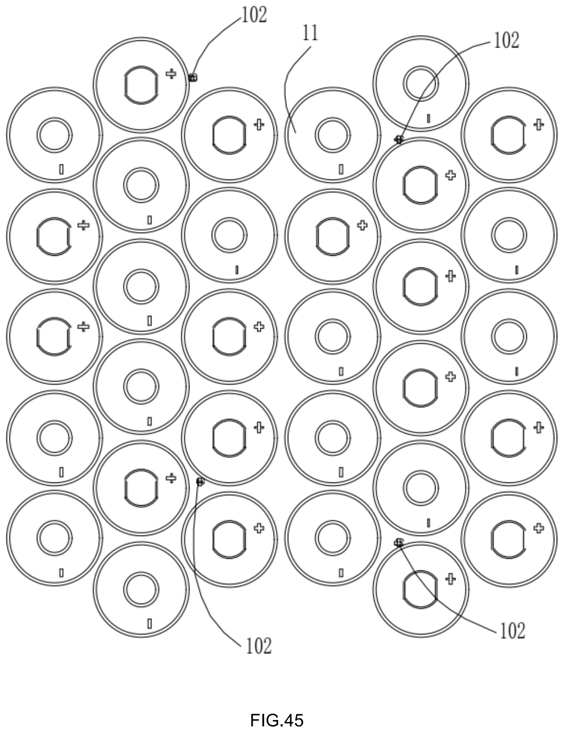

In some embodiments, the temperature sensing elements 10 are generally arranged on the cells 11 located on or near the center plane 116 of the battery pack 1 to collect the temperature in the high-temperature area. However, for cells 11 that are lithium iron phosphate cells, it is difficult to determine the high-temperature area of the battery pack 1 due to the characteristics of the material of the cell 11. Therefore, it is necessary to arrange no less than three temperature sensing elements 10 to detect the temperature of the cell 11. As shown in FIG. 45, in a battery pack 1 that uses lithium iron phosphate cells, four temperature sensing elements 10 are arranged as an example, where two temperature sensing elements 10 are arranged at intervals on the cells 11 located at the edge of the battery pack 1, and the other two temperature sensing elements 10 are arranged on the cells 11 located in the middle area of the battery pack 1. By arranging temperature sensing elements 10 in the middle and periphery of the battery pack 1, the temperature of the cells 11 in the battery pack 1 can be effectively detected.

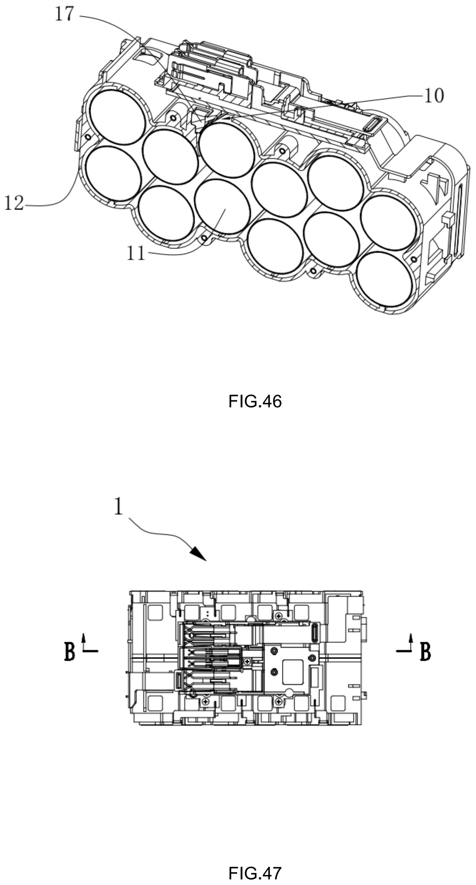

As shown in FIGS. 46 to 49, in order that the temperature of the cell 11 can be accurately measured through the temperature sensing element 10, the present application further provides the battery pack 1. The battery pack 1 includes the housing assembly 15, the multiple cells 11, a magnetic element 17, and the temperature sensing element 10.

The multiple cells 11 are accommodated in the housing assembly 15, and each of the cells 11 includes a magnetic housing 112. The magnetic element 17 is magnetically attached to one cell 11 among the multiple cells 11. The temperature sensing element 10 includes the wire 101 and the probe 102, and the probe 102 of the temperature sensing element 10 is at least partially clamped between the magnetic element 17 and the cell 11.

The magnetic element 17 is magnetically attached to the magnetic housing 112 of the cell 11 so that the probe 102 of the temperature sensing element 10 is closely attached to the magnetic housing 112, thereby enabling accurate and effective acquisition of the temperature of the cell 11.

In some examples, the magnetic housing 112 is a steel housing. Since the steel housing can be magnetically attracted to the magnetic element 17 stably, it is ensured that the probe 102 is stably clamped between the magnetic housing 112 and the magnetic element 17.

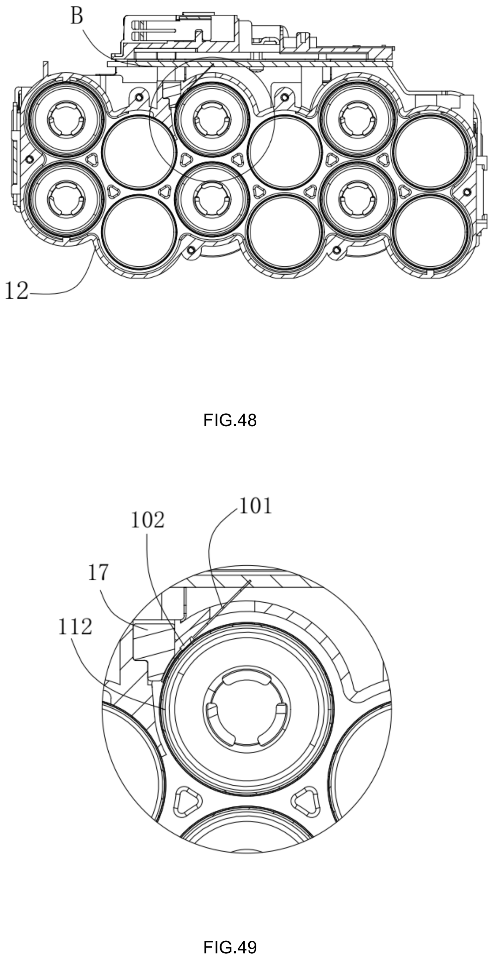

As shown in FIG. 49, in some examples, the curvature of part of the magnetic element 17 is similar to the curvature of the magnetic housing 112. With the preceding configuration, the portion of the magnetic element 17 that is fitted with the magnetic housing 112 can be effectively fitted, thereby increasing a fitting surface for magnetic attachment between the magnetic element 17 and the magnetic housing 112 and ensuring that the probe 102 is fixed stably. In addition, the space occupied by the magnetic element 17 can be reduced, thereby facilitating the arrangement of the magnetic element 17 in the housing assembly 15.

As shown in FIG. 46, in some examples, the temperature sensing element 10 and the magnetic element 17 are accommodated in the cell bracket 12. The cell bracket 12 is used for supporting the multiple cells 11 and is disposed in the housing assembly 15. The temperature sensing element 10 and the magnetic element 17 are accommodated in the cell bracket 12 so that it is ensured that the temperature sensing element 10 can effectively detect the temperature of the cell 11 without occupying the space of the housing assembly 15, thereby reducing the volume of the battery pack 1.

In some examples, the probe 102 is a thermistor. A thermistor is typically characterized by sensitivity to temperatures. The thermistor exhibits different resistance values at different temperatures, which can effectively measure the temperature of the cell 11 accurately. In some examples, the probe 102 may be a positive temperature coefficient (PTC) thermistor or a negative temperature coefficient (NTC) thermistor. The resistance value of the positive temperature coefficient thermistor increases with a rising temperature, whereas the resistance value of the negative temperature coefficient thermistor decreases with a rising temperature. In practical use, the positive temperature coefficient thermistor and the negative temperature coefficient thermistor may be selected according to actual situations, and no particular limitation is imposed herein. As shown in FIG. 49, in some examples, the magnetic element 17 is adhered, bound, or stuck to the temperature sensing element 10. In the preceding manner, the magnetic element 17 and the temperature sensing element 10 are fixed together, thereby facilitating subsequent mounting.

In some examples, the magnetic element 17 includes a recess for accommodating the probe 102. The probe 102 is accommodated in the recess so that the space occupied by the probe 102 can be reduced, thereby enabling the magnetic element 17 to be stably attached to the magnetic housing 112.

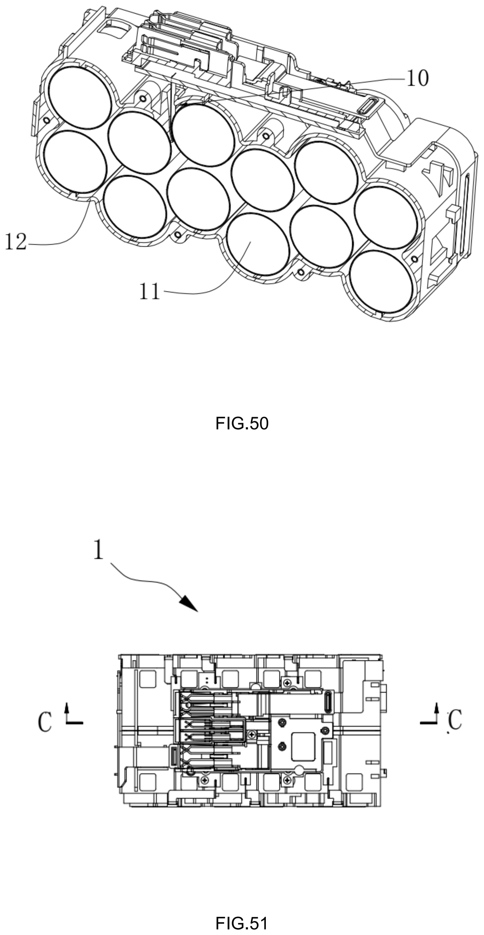

As shown in FIGS. 50 to 52, in order that the temperature of the cell 11 can be accurately measured through the temperature sensing element 10, the present application further provides the battery pack 1. The battery pack 1 includes the housing assembly 15, the multiple cells 11, and the temperature sensing element 10.

The multiple cells 11 are accommodated in the housing assembly 15, and each of the cells 11 includes the magnetic housing 112. The temperature sensing element 10 includes the wire 101, the probe 102, and the magnetic element 17, and the temperature sensing element 10 is magnetically attached to one cell 11 among the multiple cells 11. The magnetic element 17 is magnetically attached to the magnetic housing 112 of the cell 11 so that the probe 102 of the temperature sensing element 10 is closely attached to the magnetic housing 112, thereby enabling the accurate and effective acquisition of the temperature of the cell 11.

In some examples, the probe 102 and the magnetic element 17 are covered with the film material. The thin-film temperature sensing element 10 is disposed on the outer surface of the cell 11. The head of the thin-film temperature sensing element 10 is smaller than the head of the bead-type temperature sensing element 10, so the thin-film temperature sensing element 10 can be more effectively attached to the surface of the cell 11 to more accurately detect the temperature of the cell 11.

In some examples, the probe 102 is covered with the film material, the magnetic element 17 is a magnetic coating, and the magnetic coating is coated on a side of the film material facing away from the probe 102. The magnetic coating is adopted so that the attachment between the probe 102 and the magnetic housing 112 is ensured and the volume of the magnetic element 17 can be reduced, thereby reducing the occupied space.

In some examples, the probe 102 is the thermistor. A thermistor is typically characterized by sensitivity to temperatures. The thermistor exhibits different resistance values at different temperatures, which can effectively measure the temperature of the cell 11 accurately. In some examples, the probe 102 may be the positive temperature coefficient (PTC) thermistor or the negative temperature coefficient (NTC) thermistor. The resistance value of the positive temperature coefficient thermistor increases with a rising temperature, whereas the resistance value of the negative temperature coefficient thermistor decreases with a rising temperature. In practical use, the positive temperature coefficient thermistor and the negative temperature coefficient thermistor may be selected according to actual situations, and no particular limitation is imposed herein.

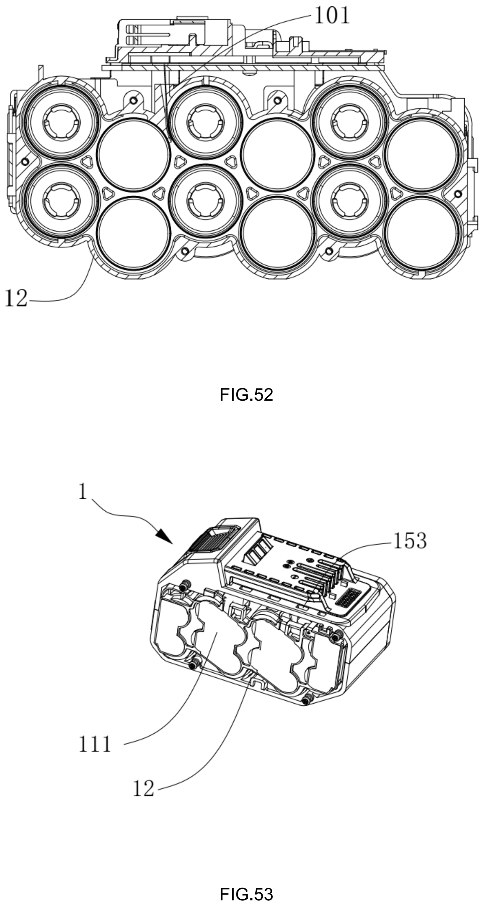

As shown in FIGS. 53-57, in order that the heat of the cells 11 in the battery pack 1 can be effectively dissipated, the present application provides the battery pack 1. The battery pack 1 includes the housing assembly 15, the multiple cells 11, and the cell bracket 12. The housing assembly 15 and/or the cell bracket 12 of the battery pack 1 are formed with air vents. When the battery pack is coupled to a charger or another device, the charger or the device can blow air into or extract air from the battery pack. Thus, the temperatures of the multiple cells 11 are rapidly reduced so that the battery pack 1 meets a charging condition.

The multiple cells 11 are accommodated in the housing assembly 15. The cell bracket 12 is configured to support the multiple cells 11. The cell bracket 12 is formed with two sets of end air vents and one set of middle air vents, and in a plane parallel to the axis of each of the multiple cells 11, the set of middle air vents is disposed between the two sets of end air vents.

The external airflow enters the cell bracket 12 from one set of end air vents, then passes through the middle air vents, and discharges from the other set of end air vents. In this process, an effective heat exchange can be performed on the cells 11 in the cell bracket 12, ensuring the heat dissipation efficiency of the cells 11. The end air vents serving as air inlets of the cell bracket 12 and the end air vents serving as air outlets of the cell bracket 12 are replaceable and may be arranged according to actual situations.

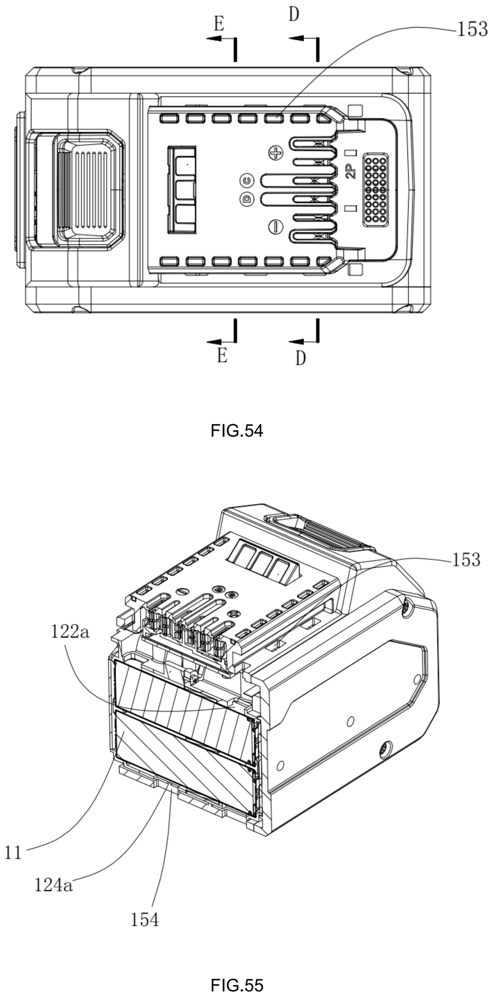

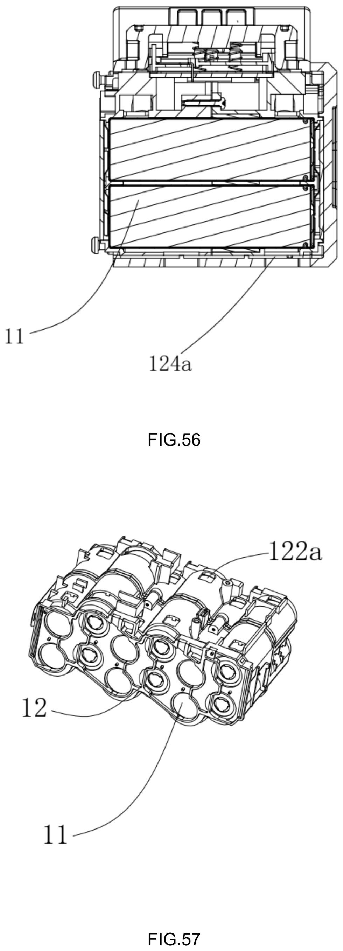

As shown in FIGS. 55 and 56, in some examples, the two sets of end air vents include multiple first air inlets 122a distributed at two ends of the multiple cells 11. The multiple first air inlets 122a may be arranged at the upper end of the cell bracket 12. The multiple first air inlets 122a are arranged so that multiple air channels can be formed inside the cell bracket 12. Thus, the effective heat exchange can be performed on cells 11 at different positions, improving the heat dissipation efficiency of the cells 11.

In some examples, the battery pack 1 further includes an L-shaped partition plate, where the L-shaped partition plate is disposed at one of the multiple first air inlets 122a to guide part of the airflow to cells 11 that do not directly face the multiple first air inlets 122a. The airflow cannot directly flow inside at the position where the button 1521 of the battery pack 1 is disposed or at another position where a first air inlet 122a cannot be conveniently formed. Therefore, the L-shaped partition plate is disposed so that the airflow closest to the position where the first air inlet 122a cannot be conveniently formed can be diverted. Thus, part of the airflow is guided by the L-shaped partition plate toward the cells 11 at this position so that all the cells 11 can effectively perform heat exchanges with the airflow, thereby ensuring overall air-cooling heat dissipation of the battery pack 1.

As shown in FIGS. 55 and 56, in some examples, the set of middle air vents includes multiple first air outlets 124a distributed near the middle section of the multiple cells 11. The airflow entering from the multiple first air inlets 122a flows out from the multiple first air outlets 124a so that multiple air channels can be formed inside the cell bracket 12. Thus, the multiple cells 11, particularly the middle section with a relatively high temperature, can be air-cooled. Due to the blockage and limitation of the heat-spreading member 16, the first air outlets 124a may not be arranged at the midpoint of the cells and may be offset appropriately or arranged in sections. The multiple first air outlets 124a are arranged at the lower end of the cell bracket 12 and form Y-shaped air channels together with the first air inlets 122a. Of course, the first air inlets 122a may be formed at the lower end of the cell bracket 12, the first air outlets 124a may be formed at the upper end of the cell bracket 12, and no particular limitation is imposed herein. In other examples, the first air outlets 124a and the first air inlets 122a may enable a reverse flow, and no particular limitation is imposed herein.

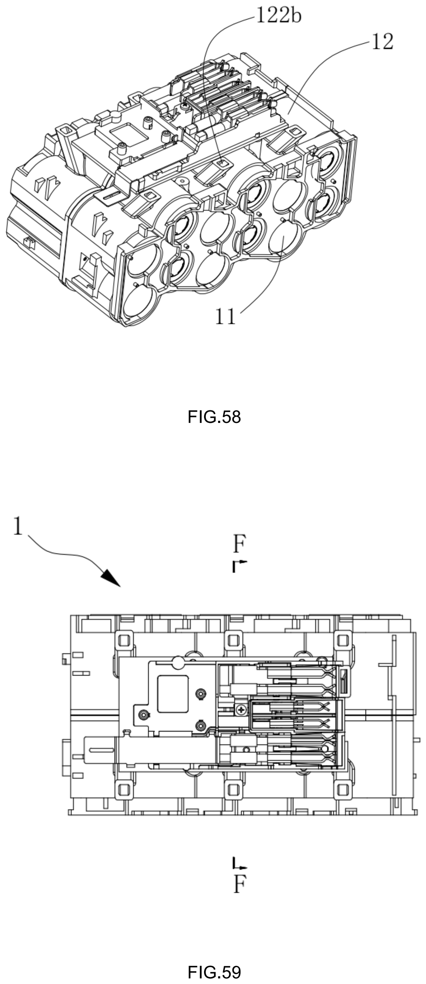

As shown in FIGS. 58-60, in order that the heat of the cells 11 in the battery pack 1 can be effectively dissipated, the present application further provides the battery pack 1. The battery pack 1 includes the housing assembly 15, the multiple cells 11, and the cell bracket 12. The housing assembly 15 and/or the cell bracket 12 of the battery pack 1 are formed with the air vents. When the battery pack is coupled to the charger or the device, the charger or the device can blow air into or extract air from the battery pack. Thus, the temperatures of the multiple cells 11 are rapidly reduced so that the battery pack 1 meets the charging condition.

The multiple cells 11 are accommodated in the housing assembly 15. The cell bracket 12 is disposed in the housing assembly 15 and is configured to support the multiple cells 11. The cell bracket 12 is formed or mounted with at least one air vent. The at least one air vent includes a channel 1221b that guides a flow direction of air. The channel 1221b includes a first end 12211b close to the housing assembly 15 and a second end 12212b close to the multiple cells 11. In the axial direction of each of the multiple cells 11, the distance between the second end 12212b and the midpoint of the multiple cells 11 is smaller than the distance between the first end 12211b and the midpoint of the multiple cells 11. The air vent on the cell bracket 12 may be an air inlet or an air outlet.

Since the two end portions of the cells 11 have relatively short heat dissipation paths to the external environment, the temperatures at the end portions of the cells 11 are lower than the temperature at the middle portion of the cells 11. The air vents on the cell bracket 12 are first air inlets 122b. The channel 1221b for guiding the flow direction of air is provided at a first air inlet 122b so that the airflow entering the cell bracket 12 through the channel 1221b is obliquely guided toward the middle portion of the cells 11 to be capable of performing the heat exchange with the middle portion of the cells 11. Thus, the temperature of the middle portion of the cells 11 can be rapidly reduced. Moreover, the channel 1221b can reduce air loss while effectively distributing an air volume.

In some examples, the cell bracket 12 is formed with the retaining portion 123, and the retaining portion 123 is used for fixing the circuit board 19. The retaining portion 123 is formed on the cell bracket 12 so that it is convenient to position and mount the circuit board 19, and after the circuit board 19 is mounted, it can be ensured that the circuit board 19 is stably disposed on the cell bracket 12.

As shown in FIG. 1, in some examples, the multiple cells 11 are disposed inside the cell bracket 12, and the circuit board 19 is disposed outside the cell bracket 12. The cells 11 are separated from the circuit board 19 through the cell bracket 12 so that the cell bracket 12 and the circuit board 19 are not located in the same inner space, thereby preventing the heat generated during the operation of the cells 11 and the circuit board 19 from accumulating.

As shown in FIGS. 58-60, in some examples, the cell bracket 12 is formed or mounted with at least two first air inlets 122b, and the two first air inlets 122b are provided on two sides of the circuit board 19. The at least two first air inlets 122b are arranged so that the air intake volume of the cell bracket 12 can be increased. Thus, the cells 11 can be effectively cooled, and the heat dissipation efficiency is improved.

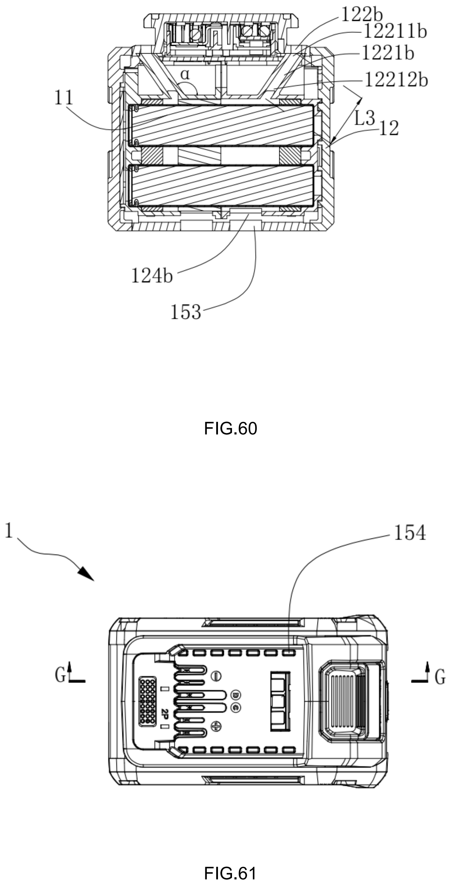

As shown in FIG. 60, in some examples, the included angle α between the channel 1221b and a horizontal plane is greater than or equal to 30 degrees and less than or equal to 80 degrees. The included angle α between the channel 1221b and the horizontal plane may be 35 degrees, 40 degrees, 45 degrees, 50 degrees, or the like. The channel 1221b is designed as an oblique channel so that the airflow can be effectively guided toward the middle portion of the cells 11, thereby efficiently cooling the middle portion of the cells 11.

As shown in FIG. 60, in some examples, the length L3 of the channel 1221b is greater than or equal to 3 mm and less than or equal to 25 mm. The length L3 of the channel 1221b may be 4 mm, 5 mm, 6 mm, 7 mm, or the like. Since the channel 1221b is located at an end portion of the cell bracket 12, the length L3 of the channel 1221b is limited so that the end portion of the cell bracket 12 is prevented from being excessively thick and increasing the volume and weight of the battery pack 1.

As shown in FIG. 60, in some examples, the air enters the channel 1221b from the first end 12211b, flows out of the channel 1221b from the second end 12212b, and flows toward the multiple cells 11. The airflow is guided through the channel 1221b so that the portion of the cell 11 with the relatively high temperature can be air-cooled as needed. In other examples, air may enter the channel 1221b from the second end 12212b and flow out of the channel 1221b from the first end 12211b, and no particular limitation is imposed herein.

In some examples, first air inlets 122b corresponding to different columns of cells 11 have different areas. Since the multiple cells 11 in the battery pack 1 are in various heat generation conditions, the areas of the first air inlets 122b are specifically designed, and the cells 11 can be air cooled according to the heat generation conditions of the cells 11. Thus, the uniformity with which the entire battery pack 1 is cooled can be ensured.

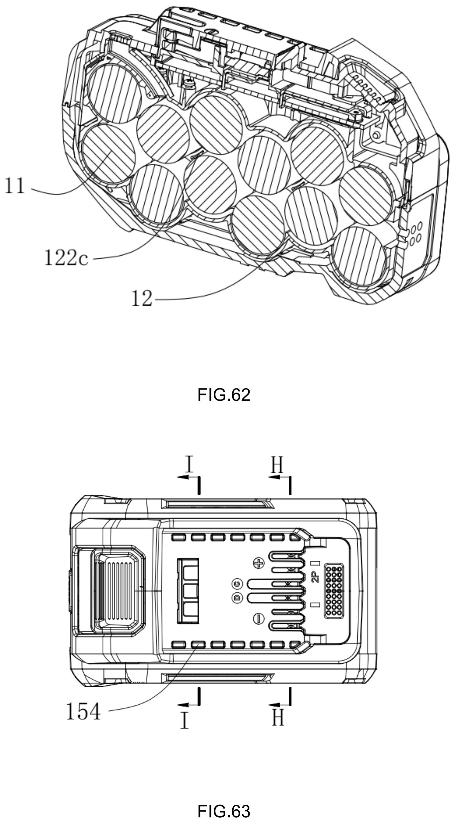

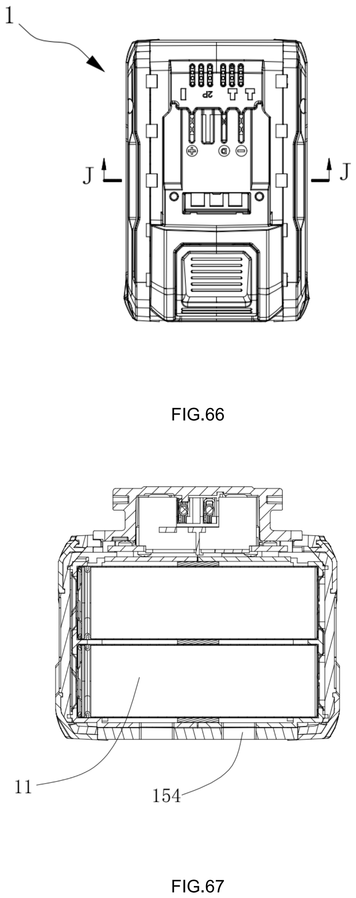

As shown in FIGS. 61-71, in order that the heat of the battery pack 1 can be dissipated, the present application further provides the battery pack 1. The battery pack 1 includes the housing assembly 15, the multiple cells 11, and the cell bracket 12. The housing assembly 15 and/or the cell bracket 12 of the battery pack 1 are formed with the air vents. When the battery pack is coupled to the charger or the device, the charger or the device can blow air into or extract air from the battery pack. Thus, the temperatures of the multiple cells 11 are rapidly reduced so that the battery pack 1 meets the charging condition.

The multiple cells 11 are accommodated in the housing assembly 15 and are arranged in parallel. The cell bracket 12 is accommodated in the housing assembly 15 and is configured to support the multiple cells 11. Multiple first air inlets 122c are provided on the cell bracket 12 in a direction perpendicular to the axis of each of the multiple cells 11, and multiple second air outlets 154 are provided on the housing assembly 15 in a direction parallel to the axis of each of the multiple cells 11.

The airflow can enter from the first air inlets 122c, flow along the axial direction of each of the cells 11, and then discharge from the second air outlets 154 in the direction perpendicular to the axial direction of each of the cells 11. The first air inlets 122c are located at the end portions of the cells 11, and the second air outlets 154 are located at the upper and lower ends of the housing assembly 15 or located at the front and rear ends of the housing assembly 15. The air enters along the axial direction of each of the cells 11 and discharges along the direction perpendicular to the axial direction of each of the cells 11 so that the spaces among the cells 11 can be effectively utilized and the airflow path is shortened.

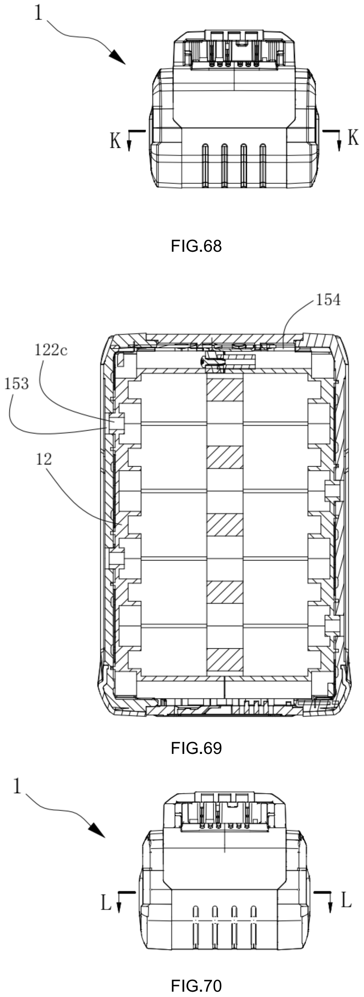

As shown in FIG. 69, in some examples, multiple second air inlets 153 are provided on the housing assembly 15 in the direction perpendicular to the axis of each of the multiple cells 11. The multiple second air inlets 153 are formed so that the external airflow conveniently enters the housing assembly 15 through the multiple second air inlets 153 and then flows into spaces among the cells 11 through the first air inlets 122c on the cell bracket 12. The second air inlets 153 may be provided opposite to the first air inlets 122c so that the external airflow can directly flow into the first air inlets 122c from the second air inlets 153.

In some examples, the first air inlets 122c and the second air inlets 153 are staggered. An air guide structure is provided to allow the second air inlets 153 to communicate with the first air inlets 122c. Thus, the external airflow can also flow into the first air inlets 122c from the second air inlets 153. The air guide structure may be an air guide duct or an air guide protrusion formed on the housing assembly 15 for guiding air. The air guide structure is disposed so that the air loss can be reduced. Moreover, the airflow can be guided and the flow direction of the airflow is controlled as needed. Thus, the cells 11 of the battery pack 1 can be effectively cooled.

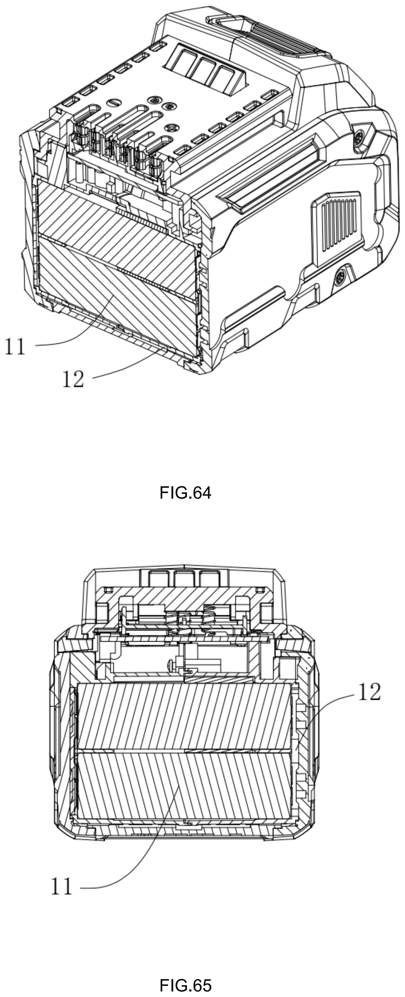

As shown in FIGS. 64-65, in some examples, the first air inlets 122c are located among multiple layers of cells 11. Since airflow channels are formed among the cells 11, the first air inlets 122c are located among the multiple layers of cells 11 so that it is convenient for the airflow passing through the first air inlets 122c to flow into the multiple airflow channels, thereby enabling uniform distribution of the airflow for cooling the cells 11.

In some examples, first air inlets 122c corresponding to different columns of cells 11 have different areas, and/or second air outlets 154 corresponding to different columns of cells 11 have different areas. The different columns of cells 11 refer to cells 11 whose axes are located in different vertical planes. The heat generation conditions of the cells 11 are analyzed. For cells 11 in more severe heat generation conditions, the corresponding first air inlets 122c have relatively large areas so that more airflows enter. Thus, the cells 11 can be effectively cooled. For cells 11 in normal heat generation conditions, the corresponding first air inlets 122c are designed to have smaller areas. The areas of the first air inlets 122c and/or the areas of the second air outlets 154 are flexibly configured so that the cells 11 can be cooled in a targeted manner, thereby ensuring uniform cooling of the battery pack 1.

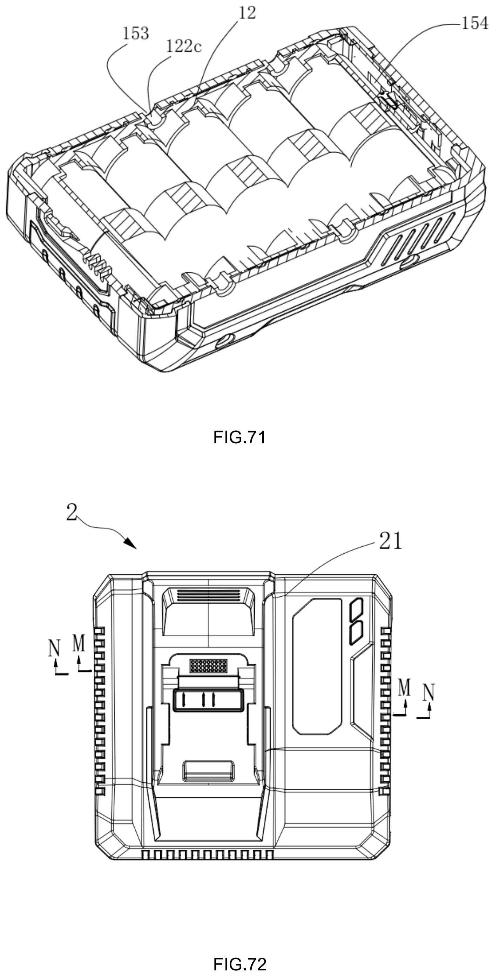

As shown in FIGS. 72-74, in some examples, the present application further provides a charging system. The charging system includes a charger 2 and the battery pack 1 described above. The charger 2 includes a battery pack interface 24. In an example, the battery pack interface 24 is coupled to the multiple second air inlets 153 and is used for inputting the airflow into the multiple second air inlets 153. During operation of the charger 2, a fan disposed in the charger 2 can blow external air into the second air inlets 153 through the battery pack interface 24. Thus, the airflow enters the spaces among the cells 11 through the first air inlets 122 to air-cool the cells 11. Before or during charging of the battery pack 1, the battery pack 1 is cooled so that it can be ensured that a charging process proceeds smoothly. In other examples, the fan in the charger 2 may extract air from the battery pack 1 through the air vents on the battery pack 1, thereby cooling the battery pack 1.

As shown in FIGS. 72-74, in order that the charging efficiency with which the battery pack 1 is charged can be ensured, the present application provides the charger. The charger 2 includes a housing 21, the battery pack interface 24, a Peltier element 22, and a controller 27.

The battery pack interface 24 is disposed on the housing 21 and configured to be electrically connected to the battery pack 1. The Peltier element 22 is accommodated in the housing 21. The Peltier element 22 includes a first operating surface 221 and a second operating surface 222, where in a first operating mode, the first operating surface 221 absorbs heat and the second operating surface 222 releases heat, and in a second operating mode, the first operating surface 221 releases heat and the second operating surface 222 absorbs heat. The controller 27 is electrically connected to the battery pack interface 24 and the Peltier element 22. The controller 27 is configured to acquire a temperature of the battery pack 1 and control, according to the temperature of the battery pack 1, the Peltier element 22 to enter the first operating mode or the second operating mode.

In the charging process of the battery pack 1, the battery pack 1 is at an appropriate temperature, which is essential for ensuring the charging efficiency. The controller 27 controls the Peltier element 22 by acquiring the temperature of the battery pack 1, and the operating surface of the Peltier element 22 adjacent to the battery pack interface 24 is configured to cool or heat. Thus, the temperature of the battery pack 1 is controlled so that the battery pack 1 remains at an appropriate charging temperature and the charging efficiency is ensured.

In some examples, the controller 27 acquires the temperature of the battery pack 1 by communicating with the battery pack 1. The temperature sensing element 10 is disposed in the battery pack 1 and configured to detect the temperature of the cell 11. The temperature sensing element 10 communicates with the controller 27 and transmits the collected temperature value of the cell 11 to the controller 27. The controller 27 controls the Peltier element 22 according to the temperature value of the cell 11.

In some examples, the controller 27 acquires the temperature of the battery pack 1 through a temperature detection member of the charger 2. The temperature of the battery pack 1 is detected through the temperature detection member so that the temperature value of the battery pack 1 can be quickly acquired and it is convenient for the controller 27 to control the Peltier element 22 according to the temperature value of the battery pack 1.

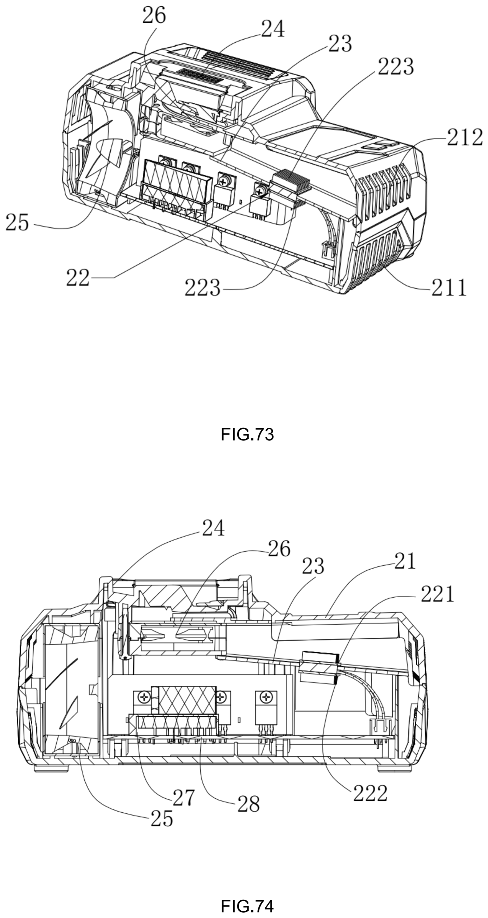

As shown in FIG. 74, in some examples, the first operating surface 221 is disposed closer to the battery pack interface 24 than the second operating surface 222. The controller 27 controls the Peltier element 22 to be in the first operating mode or the second operating mode such that the first operating surface 221 can be controlled to absorb or release heat. The cooled or heated airflow enters the battery pack 1 through the battery pack interface 24 to adjust the temperature of the battery pack 1.

As shown in FIGS. 73-74, in some examples, the charger 2 includes a first fan 25, where in the first operating mode, the first fan 25 dissipates heat of the second operating surface 222. The second operating surface 222 releases heat synchronously while the first operating surface 221 cools. Therefore, to prevent the temperature of the charger 2 from rising due to an excessively high temperature of the second operating surface 222, the first fan 25 is disposed so that the heat of the second operating surface 222 can be discharged out of the housing 21 of the charger 2, thereby ensuring that the charger 2 can operate normally.

As shown in FIG. 74, in some examples, the charger 2 further includes a control board 28, where the controller 27 is disposed on the control board 28. The controller 27 is integrated on the control board 28 so that when the first fan 25 drives the airflow to cool the control board 28, the controller 27 can be cooled. The control board 28 may be a printed circuit board (PCB).

As shown in FIG. 73, in some examples, the charger 2 has a charging air outlet 211, and the airflow is capable of passing through the first fan 25, flowing across the control board 28 and the second operating surface 222, and then discharging through the charging air outlet 211. In the charging process, the first fan 25 operates to be capable of dissipating, through the charging air outlet 211, the heat generated by the control board 28 and the second operating surface 222. Thus, electronic components of the control board 28 are protected, and it is ensured that the control board 28 can be at the appropriate temperature and operate normally.

As shown in FIGS. 73-74, in some examples, the charger 2 includes a second fan 26 and has a charging air inlet 212, and the airflow is capable of passing through the charging air inlet 212, flowing across the first operating surface 221 and the second fan 26, and then entering the battery pack interface 24. In the charging process of the battery pack 1, the second fan 26 is activated, and the external airflow enters through the charging air inlet 212, flows across the first operating surface 221, and then enters the battery pack interface 24 through the second fan 26 to control the temperature of the battery pack 1 in the charging process. The second fan 26 is disposed so that the airflow can be effectively driven to flow, thereby ensuring the cooling effect.

In some examples, the Peltier element 22 is reversely energized to switch between the first operating mode and the second operating mode. The switchover of the Peltier element 22 between the operating modes is similar to forward and reverse rotation control of an electric motor, where the flow direction of a current is controlled such that the first operating mode and the second operating mode can be controlled.

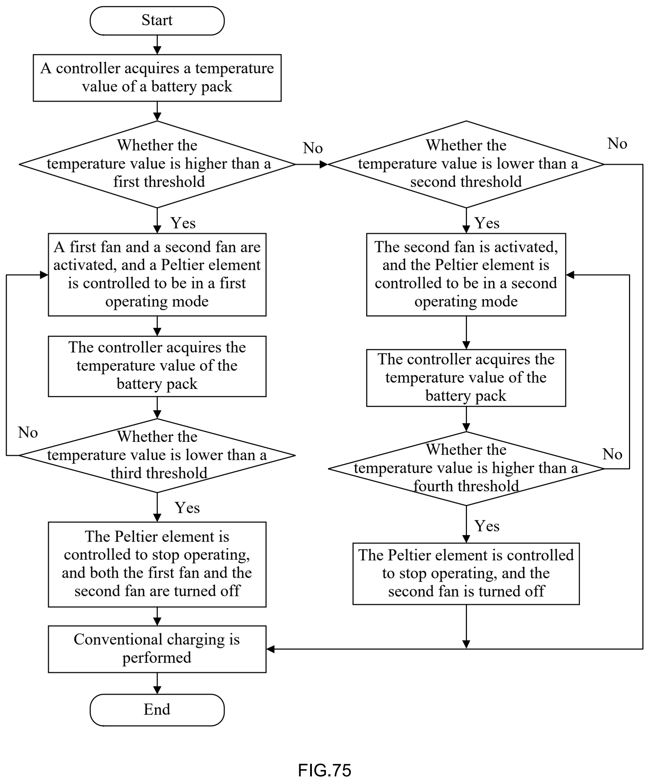

As shown in FIG. 75, the operating process of the charger 2 is described below.

The controller 27 acquires the temperature value of the battery pack 1 and determines whether the temperature value of the battery pack 1 is higher than a first threshold. If the temperature value of the battery pack 1 is higher than the first threshold, the first fan 25 and the second fan 26 are activated, and the Peltier element 22 is controlled to be in the first operating mode. The controller 27 acquires the temperature value of the battery pack 1 and determines whether the temperature value is lower than a third threshold. If the temperature value is not lower than the third threshold, the Peltier element 22 is controlled to be in the first operating mode until the requirement is met. If the temperature value is lower than the third threshold, the Peltier element 22 is controlled to stop operating, both the first fan 25 and the second fan 26 are turned off, and conventional charging is performed. The first threshold is 80°C, and the third threshold is 40°C. Of course, the first threshold and the third threshold are adjustable according to actual situations and are not further limited herein.

If the temperature value of the battery pack 1 is not higher than the first threshold, it is determined whether the temperature value is lower than a second threshold. If the temperature value is not lower than the second threshold, a conventional charging mode is entered. If the temperature value is lower than the second threshold, the second fan 26 is activated, and the Peltier element 22 is controlled to be in the second operating mode. The controller 27 acquires the temperature value of the battery pack 1 and determines whether the temperature value is higher than a fourth threshold. If the temperature value is not higher than the fourth threshold, the Peltier element 22 is controlled to be in the second operating mode until the requirement is met. If the temperature value is higher than the fourth threshold, the Peltier element 22 is controlled to stop operating, the second fan 26 is turned off, and the conventional charging is performed. The second threshold is 0°C, and the fourth threshold is 2°C. Of course, the second threshold and the fourth threshold are adjustable according to actual situations and are not further limited herein.

As shown in FIGS. 72-74, in order that the charging efficiency with which the battery pack 1 is charged can be ensured, the present application further provides the charger. The charger 2 includes the housing 21, the battery pack interface 24, the Peltier element 22, the first fan 25, and the second fan 26. The battery pack interface 24 is disposed on the housing 21 and configured to be electrically connected to the battery pack 1. The Peltier element 22 is accommodated in the housing 21. The Peltier element 22 includes the first operating surface 221 and the second operating surface 222, and the first operating surface 221 is disposed closer to the battery pack interface 24 than the second operating surface 222. The first fan 25 is configured to guide the airflow to flow across the second operating surface 222. The second fan 26 is configured to guide the airflow to flow across the first operating surface 221 to the battery pack interface 24.

In the process where the charger 2 charges the battery pack 1, the first operating surface 221 of the Peltier element 22 is controlled, according to the temperature of the battery pack 1, to heat or cool. When the first operating surface 221 of the Peltier element 22 cools, the first fan 25 and the second fan 26 are activated. The first fan 25 discharges the heat generated by the second operating surface 222 out of the housing 21, and the second fan 26 guides the airflow to flow across the first operating surface 221 and then enter the battery pack interface 24 to cool the battery pack 1. When the temperature of the battery pack 1 is relatively low, the first operating surface 221 heats, and the second fan 26 guides the airflow to flow across the first operating surface 221 and then enter the battery pack interface 24 to heat the battery pack 1. In the preceding manner, the charger 2 can be configured to adjust the temperature of the battery pack 1 so that the battery pack 1 is at the appropriate charging temperature, thereby ensuring the charging efficiency.

As shown in FIGS. 73-74, in some examples, the first fan 25 is configured to guide the airflow from the inside of the housing 21 to the outside of the housing 21, and the second fan 26 is configured to guide the airflow from the outside of the housing 21 to the inside of the housing 21. The first fan 25 and the second fan 26 are controlled so that the flow direction of the airflow can be effectively controlled, thereby enabling the adjustment of the temperature of the battery pack 1 and the temperature of the charger 2.

As shown in FIG. 74, in some examples, the charger 2 further includes a control board 28, where the first fan 25 is configured to guide the airflow to flow across the control board 28 and the second operating surface 222. When the first fan 25 operates, the airflow can take away the heat generated by the control board 28 and the second operating surface 222, thereby ensuring that the charger 2 can perform charging work normally.

As shown in FIG. 73, in some examples, heat sink fins 223 are disposed on the first operating surface 221 and/or the second operating surface 222. The heat dissipation fins 223 are disposed so that the area in contact with air can be increased and a heat exchange can be quickly performed with the airflow flowing across the first operating surface 221 and/or the second operating surface 222.

As shown in FIGS. 73-74, in some examples, the charger 2 includes a barrier element 23, where the first operating surface 221 and the second operating surface 222 are located on two sides of the barrier element 23, respectively. The barrier element 23 is disposed so that the first operating surface 221 and the second operating surface 222 can be separated from each other. Thus, the first operating surface 221 and the second operating surface 222 do not affect each other. This configuration ensures that the charger 2 operates normally and the temperature of the battery pack 1 can be controlled.

As shown in FIGS. 73-74, in some examples, the first fan 25 and the second fan 26 are mounted on two sides of the barrier element 23, respectively. The first fan 25 and the second fan 26 are separated from each other by the barrier element 23 so that the operation of the first fan 25 and the operation of the second fan 26 do not affect each other.

In some examples, the Peltier element 22 has the first operating mode and the second operating mode, where in the first operating mode, the first operating surface 221 absorbs heat and the second operating surface 222 releases heat, and in the second operating mode, the first operating surface 221 releases heat and the second operating surface 222 absorbs heat. The controller 27 on the control board 28 can communicate with the temperature detection member of the battery pack 1 to acquire the temperature of the battery pack 1. According to the temperature value of the battery pack 1, the controller 27 controls the Peltier element 22 to be in the first operating mode or the second operating mode. In the preceding manner, the temperature of the battery pack 1 can be effectively controlled and adjusted so that the battery pack 1 remains at the appropriate charging temperature.

In some examples, the Peltier element 22 is reversely energized to switch between the first operating mode and the second operating mode. The switchover of the Peltier element 22 between the operating modes is similar to forward and reverse rotation control of an electric motor, where the flow direction of a current is controlled such that the first operating mode and the second operating mode can be controlled.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A battery pack, comprising:
a plurality of cells (11);
a cell bracket (12) configured to support the plurality of cells (11); and
a terminal assembly (13) electrically connected to the plurality of cells (11) and configured to be coupled to an interface of a power tool;
wherein the cell bracket (12) is at least partially exposed to an external environment, and thermal conductivity of the cell bracket (12) is higher than or equal to 0.5 W/(m·K).

2. The battery pack according to claim 1, wherein the cell bracket (12) is formed with a retaining portion (123) for fixing a circuit board (19), wherein the plurality of cells (11) are disposed inside the cell bracket (12), and the circuit board (19) is disposed outside the cell bracket (12).

3. The battery pack according to claim 2, wherein the retaining portion (123) is formed with heat dissipation ribs (121), and the heat dissipation ribs (121) are disposed between the plurality of cells (11) and the circuit board (19).

4. The battery pack according to claim 1, wherein the battery pack (1) further comprises side housing portions (151) for covering electrodes of the plurality of cells (11), and the side housing portions (151) are substantially perpendicular to an axis of each of the plurality of cells (11), wherein the electrodes of the plurality of cells (11) are covered with a sealant (111).

5. The battery pack according to claim 4, further comprising an upper housing portion (152), wherein the upper housing portion (152) is disposed between the terminal assembly (13) and the circuit board (19).

6. The battery pack according to claim 1, further comprising a heat-spreading member (16) that clasps the plurality of cells (11), wherein thermal conductivity of the heat-spreading member (16) is higher than the thermal conductivity of the cell bracket (12), and the cell bracket (12) is in direct contact with the heat-spreading member (16).

7. The battery pack according to claim 1, wherein a minimum distance between the plurality of cells (11) and an exposed surface of the cell bracket (12) is less than or equal to 3 mm.

8. The battery pack according to claim 4, wherein the plurality of cells (11) are substantially cylindrical and each of the plurality of cells comprises a first end surface (113) and a second end surface (114); and the side housing portions (151) are substantially parallel to the first end surface (113) and the second end surface (114); wherein in the axial direction of each of the plurality of cells (11), no air gap exists between the first end surface (113) and one of the side housing portions (151) with a minimum linear distance therefrom, and an air gap (1513) exists between the second end surface (114) and one of the side housing portions (151) with a minimum linear distance therefrom.

9. The battery pack according to claim 8, wherein thermal conductivity of components between the first end surface (113) and the one of the side housing portions (151) with the minimum linear distance therefrom is higher than or equal to 0.3 W/(m·K).

10. The battery pack according to claim 8, wherein in the axial direction of each of the plurality of cells (11), a thickness of a sealant coating on at least part of the second end surface (114) is smaller than a thickness of a sealant coating on the first end surface (113).

11. The battery pack according to claim 10, wherein each of the plurality of cells (11) comprises an exhaust device, and the exhaust device is disposed on the second end surface (114).

12. The battery pack according to claim 10, wherein a negative electrode of each of the plurality of cells (11) is disposed on the first end surface (113), and a positive electrode of each of the plurality of cells (11) is disposed on the second end surface (114).

13. The battery pack according to claim 4, wherein the cell bracket (12) comprises an end surface configured to expose the plurality of electrodes; wherein the battery pack further comprises an end cover (155) disposed between the end surface of the cell bracket (12) and the side housing portion (151), and the sealant (111) is filled between the end surface and the end cover (155); wherein when a temperature of any one of the plurality of cells (11) is greater than or equal to 150°C, the end cover (155) and the side housing portion (151) are each damaged to form openings.

14. The battery pack according to claim 13, wherein recesses (1551) are formed at portions on the end cover (155) that correspond to at least some of the plurality of electrodes.

15. The battery pack according to claim 14, wherein and a depth of each of recesses of the end cover (155) that correspond to positive electrodes is greater than a depth of each of recesses of the end cover (155) that correspond to negative electrodes.
